(19) **Europäisches Patentamt**
**European Patent Office**
**Office européen des brevets**

(11) **EP 2 696 195 A2**

(12) **EUROPEAN PATENT APPLICATION**

(43) Date of publication:
**12.02.2014 Bulletin 2014/07**

(51) Int Cl.:
***G01N 21/958*** *(2006.01)*

(21) Application number: **13179015.6**

(22) Date of filing: **02.08.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **09.08.2012 JP 2012176638**<br>**07.06.2013 JP 2013120803**<br><br>(71) Applicant: **Ricoh Company, Ltd.**<br>**Tokyo 143-8555 (JP)** | (72) Inventors:<br>• **Hirai, Hideaki**<br>**Tokyo 143-8555 (JP)**<br>• **Itoh, Izumi**<br>**Tokyo 143-8555 (JP)**<br><br>(74) Representative: **Schwabe - Sandmair - Marx**<br>**Patentanwälte**<br>**Stuntzstraße 16**<br>**81677 München (DE)** |

(54) **Adhered substance detection apparatus, device control system for movable apparatus, and movable apparatus**

(57)    An adhered substance detection apparatus (300) includes a light irradiating unit disposed at a first face side of a planar member (105) having light transmittance; an image capturing unit (101) to capture an image of a detection target object adhering on a second face of the planar member (105) using light emitted from the light irradiating unit; a detection processing means (102) to conduct a detection process for detecting the detection target object based on captured image captured by the image capturing unit (101); and a light quantity adjuster to adjust light quantity emitted from the light irradiating unit. The image capturing unit (101) is disposed at a position to receive regular reflection light regularly reflected on a non-adhering area of detection target object on the second face of the planar member (105), the regular reflection light is the light emitted from the light irradiating unit and then reflected on the non-adhering area of detection target object.

## FIG. 1

EP 2 696 195 A2

## Description

BACKGROUND

Technical Field

The present invention relates to an adhered substance detection apparatus to detect a substance adhered on a light-permeable planar member such as windshields used for vehicles such as automobiles, ships, airplanes, or a window glass or the like of buildings; a device control system for a movable apparatus to control devices of a movable apparatus based on a detection result of the adhered substance detection apparatus, and a movable apparatus employing the device control system for movable apparatus.

Background Art

JP-2010-14494-A discloses a foreign particles detection apparatus (or adhered substance detection apparatus) that detects foreign particles (or adhered substance) adhered on a windshield of a vehicle.
The foreign particles detection apparatus includes a light emitting unit or light irradiating unit disposed at an inner face (one face) side of the windshield, and a camera. The camera captures images of foreign particles or substance such as raindrops adhered on the outer face on an outer face (another face) of the windshield by irradiating the windshield with light and detecting the light reflected from the windshield.
When the light coming from the light emitting unit enters the windshield where raindrops do not adhere, the light is reflected on the outer face of the windshield as regular reflection light, whereas when the light coming from the light emitting unit enters the windshield where raindrops adhere, the light passes through the outer face of the windshield, and thereby the reflection light is not received by the camera. With this configuration, it can be determined that raindrops adhere at an area where the luminance of the captured image is low.
The adhered substance detection apparatus of JP-2010-14494-A uses a light emitting diode (LED) as the light emitting unit. The light emission output of the LED is affected by temperature. Specifically, the light emission output of the light emitting unit decreases when the temperature increases. Further, the light emission quantity of the LED may decrease due to aging. This is a problem because a change in the light emission quantity of the light emitting unit might cause a false detection. The false detection may occur with any type of light irradiating unit when the light emission quantity emitted from the light irradiating unit change over time.
The false detection can be reduced by using a specific light receiver to monitor the change of the light emission quantity emitted from the light irradiating unit over time, in which the raindrops detection of captured image can be conducted based on the monitoring. However, the numbers of parts increase as does the cost. Further, because a part of the light irradiating the windshield is received by the specific light receiver, the quantity of light irradiating the windshield, which is inefficient. Further, to detect the light quantity change by using the specific light receiver, calibration of the specific light receiver is required, thereby complicating control.

SUMMARY

The present invention is directed to an adhered substance detection apparatus to detect substance adhered on a planar member such as a windshield, and a false detection of a detection target can be suppressed without disposing a specific light receiver that monitors time-wise change of light quantity. The adhered substance detection apparatus includes a light irradiating unit disposed at a first face side of a planar member having light transmittance; an image capturing unit to capture an image of a detection target object adhering on a second face of the planar member using light emitted from the light irradiating unit; a detection processing means to conduct a detection process for detecting the detection target object based on captured image captured by the image capturing unit; and a light quantity adjuster to adjust light quantity emitted from the light irradiating unit. The image capturing unit is disposed at a position to receive regular reflection light regularly reflected on a non-adhering area of detection target object on the second face of the planar member, the regular reflection light is the light emitted from the light irradiating unit and then reflected on the non-adhering area of detection target object. The detection processing means conducts a detection process to detect an object adhered on the second face of the planar member as the detection target object, in which a part of light emitted from the light irradiating unit passing through an adhering area where the object adheres. When the quantity of light received by the image capturing unit at a given number or more image capturing pixels substantially uniformly exceeds or falls below a control value, the light quantity adjuster adjusts the light quantity emitted from the light irradiating unit so that the light quantity received by the image capturing pixels becomes a target light quantity.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 shows a schematic configuration of a vehicle-installed device control system according to an example embodiment;
FIG. 2 shows a schematic configuration of an adhered substance detection apparatus having an image capturing unit for the vehicle-installed device control system;

FIG. 3 shows an example of an optical system of the image capturing unit;

FIG. 4 shows a schematic configuration of a light source unit of the image capturing unit;

FIG. 5 shows another schematic configuration of a light source unit of the image capturing unit;

FIG. 6 shows another schematic configuration of a light source unit of the image capturing unit;

FIG. 7 shows an example configuration having a light block member disposed between a light source unit and a capture lens;

FIG. 8 shows a perspective view of schematic configurations of the image capturing unit;

FIG. 9A shows a side view of the image capturing unit attached to a vehicle having an inclination angle of 22 degrees for a windshield 105 with respect to the horizontal direction;

FIG. 9B shows an optical scheme of the image capturing unit when raindrops do not adhere under the conditions shown FIG. 9A;

FIG. 9C shows an optical scheme of the image capturing unit when raindrops adhere under the conditions shown FIG. 9A;

FIG. 10A shows a side view of the image capturing unit attached to a vehicle having an inclination angle of 34 degrees for a windshield with respect to the horizontal direction;

FIG. 10B shows an optical scheme of the image capturing unit when raindrops do not adhere under the conditions shown FIG. 10A;

FIG. 11 shows a perspective view of a light guide member of the light source unit of the image capturing unit;

FIG. 12 shows a perspective view of a reflective deflection prism of the image capturing unit;

FIG. 13 shows a perspective view of another reflective deflection prism of the image capturing unit;

FIG. 14 shows a perspective view of a reflective deflection prism of variation;

FIG. 15 shows an optical system of the image capturing unit using the reflective deflection prism of FIG. 14;

FIG. 16 shows a filter property of a cut-filter applicable for image data captured for adhered substance detection;

FIG. 17 shows a filter property of a band-pass filter for image data captured for adhered substance detection;

FIG. 18 shows a front view of an optical filter composed of a filter area for vehicle detection image area, and a filter area for adhered substance detection image area;

FIG. 19 shows an example of image generated from captured image data;

FIG. 20 shows a schematic configuration of the optical filter and an image sensor viewed from a direction perpendicular to a light transmission direction;

FIG. 21 shows a relationship between a vehicle detection filter and an adhered substance detection filter of the optical filter, and a vehicle detection image area and an adhered substance detection image area on the image sensor;

FIG. 22 shows a transmittance property of a first light separation filter layer of the optical filter;

FIG. 23 shows a polarizer having a wire grid structure used as a polarized-light filter layer of the optical filter;

FIG. 24 shows a transmittance property of a second light separation filter layer of the optical filter;

FIG. 25A shows an example captured image using the reflective deflection prism shown in FIG. 14, in which a condition composed of raindrops adhering and no-adhering of fogging is captured;

FIG. 25B shows an example captured image using the reflective deflection prism shown in FIG. 14, in which a condition composed of raindrops adhering and adhering of fogging is captured;

FIG. 26A shows an example of captured image for one of two frames to detect raindrops, which is captured when the light source unit is set light-OFF;

FIG. 26B shows an example of captured image for one of two frames to detect raindrops, which is captured when the light source unit is set light-ON;

FIG. 27 shows a flowchart of a process of adjustment of light emission output of the light source unit;

FIG. 28 shows a flowchart of a process of detecting conditions of a windshield;

FIG. 29 shows a flowchart of a process of detecting parameters for wiper control and defroster control from image data of vehicle detection image area;

FIG. 30 shows a captured image when the windshield is fogged;

FIG. 31 shows a captured image when the windshield is freezing;

FIG. 32 shows a flowchart of a process of detecting parameters for wiper control and defroster control from image data of adhered substance detection image area;

FIG. 33 shows a flowchart of a process of determining conditions of the windshield;

FIGs. 34A and 34B show tables of determination criteria for determining conditions of the windshield; and

FIG. 35 is a table of instructions matched to results of condition determination of the windshield.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system according to an example embodiment is described hereinafter.

A description is given of a control system to control vehicle-installed devices according to an example embodiment, in which an image capturing device is installed in a vehicle. The image capturing device can be used with the control system to control vehicle-installed devices, but the image capturing device can be applied for other systems having an object detector or object detection apparatus to conduct the detection of objects based on captured images captured by the image capturing device. The vehicle may not be limited to any specific vehicles but may include various types of vehicles such as automobiles, ship, robots or the like.

A description is now given of an adhered substance detection apparatus according to an example embodiment can be used for a vehicle-installed device control system, which is an example of device control system for a movable apparatus that controls devices installed in a vehicle such as an automobile, which is an example of the movable apparatus. Further, the adhered substance detection apparatus can be applied other than vehicle-installed device control system. For example, the adhered substance detection apparatus can be applied as an object detection apparatus that detects a target object adhered on a light-permeable planar member based on captured image.

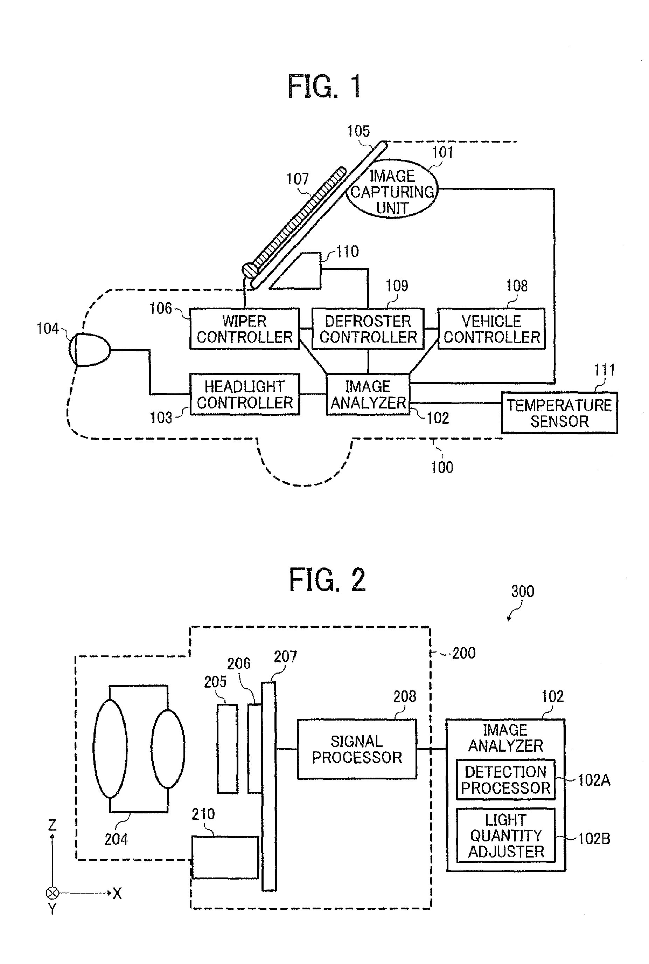

FIG. 1. shows a schematic configuration of a control system to control vehicle-installed devices according to an example embodiment, which may be referred to as a vehicle-installed device control system. A vehicle 100 such as automobiles may include a control system to control the vehicle-installed devices, and an image capturing device. Such vehicle 100 may be referred to as a detector-equipped vehicle in this disclosure. In this disclosure, for the simplicity of explanation, the vehicle 100 installs the detector to detect other objects on road or the like. It should be noted that other vehicles can be also installed with the detector. The detector can be used for any type of vehicles, moving objects used under various environmental conditions. The image capturing device can capture views of front area of the vehicle 100 as captured image data. Based on the captured image data, the control system to control, vehicle-installed devices can conduct light control of headlight, wiper-drive control, control of defroster, control of other vehicle-installed devices, or the like.

The vehicle-installed device control system includes, for example, an image capturing unit 101, which can be used as an image capturing unit or apparatus. The image capturing unit 101 includes an image capturing device to capture views of vehicle-front-area of the vehicle 100, wherein vehicle-front-area may be referred to as image capturing area or captured image area. For example, the image capturing device captures a vehicle-front-area of the vehicle 100 when the vehicle 100 is running. The image capturing unit 101 may be, for example, disposed near a rear-view mirror and a windshield 105 of the vehicle 100. The windshield 105 is an example of a light-permeable planar member planar member.

Image data captured by the image capturing unit 101 is input to an image analyzer 102, which can be used as a detection processing unit. The image analyzer 102 analyzes the captured image data, transmitted from the image capturing device, in which the image analyzer 102 can be used to compute information of other vehicle existing in a front direction of the vehicle 100 such as vehicle position, a point of the compass (e.g., north, south, east, west), and distance to other vehicles.

Further, the image analyzer 102 can be used to detect a substance adhered on the windshield 105 such as raindrops, foreign particles, or the like. Further, the image analyzer 102 can be used to detect a detection-target object existing on road surfaces such as a lane (e.g., white line) or the like from the image capturing area.

Further, the vehicle 100 is provided with a temperature sensor 111 to detect ambient temperature. The image analyzer 102 may use a detection result of the temperature sensor 111 as required to conduct the above described various processing. In an example embodiment, a detection result of the temperature sensor 111 can be used to detect whether the windshield 105 is freezing, which will be described later.

The computation result of the image analyzer 102 can be transmitted to a headlight controller 103. For example, the headlight controller 103 generates control signals to control a headlight 104 based on distance data computed by the image analyzer 102, wherein the headlight 104 is one of devices installed in the vehicle 100. Specifically, for example, a switching control of high beam/low beam of the headlight 104 is conducted, and a light-dimming control is partially conducted for the headlight 104 to prevent a projection of high intensity light of headlight of the vehicle 100 to eyes of drivers of front-running vehicles and oncoming vehicles, by which the drivers of other vehicles are not dazzled by light coming from the headlight of the vehicle 100 while providing the enough field of view for the driver of vehicle 100.

The computation result of the image analyzer 102 is also transmitted to a wiper controller 106. The wiper controller 106 controls a wiper 107 to remove an adhered substance adhered on the windshield 105 such as raindrops, foreign particles, or the like from the windshield 105 of the vehicle 100. The wiper controller 106 generates control signals to control the wiper 107 upon receiving the detection result of foreign particles from the image analyzer 102. When the control signals generated by the wiper controller 106 are transmitted to the wiper 107, the wiper 107 is activated to provide the field of view for the driver of the vehicle 100.

Further, the computation result of the image analyzer 102 is also transmitted to a vehicle controller 108, which controls the driving of the vehicle 100. If the vehicle 100 deviates or departs from the vehicle lane, defined by the lane (e.g., white line), based on the detection result of the lane detected by the image analyzer 102, the vehicle controller 108 activates an alarm or warning to the driver of the vehicle 100, and activates a cruise control system such as controlling of a steering wheel and/or brake of the vehicle 100.

Further, based on a detection result of road traffic signs detected by the image analyzer 102, the vehicle controller 108 can compare information of road traffic signs and vehicle running conditions. For example, if the vehicle controller 108 determines that a driving speed or vehicle running conditions of the vehicle 100 is close to a speed limit (information of road traffic signs), the vehicle controller 108 activates an alarm or warning to the driver of the vehicle 100, and if the vehicle controller 108 determines that a driving speed of the vehicle 100 exceeds a speed limit, the vehicle controller 108 activates a cruise control system such as controlling of a brake of the vehicle 100.

Further, the computation result of the image analyzer 102 is also transmitted to a defroster controller 109 that controls a defroster 110. Specifically, based on a detection result of the windshield 105 such as freezing and fogging conditions, the defroster controller 109 generates control signals for controlling the defroster 110. Upon receiving the control signals generated by the defroster controller 109, the defroster 110 sends air to the windshield 105 and heats the windshield 105 based on the control signals to the windshield 105 so that freezing or fogging conditions are removed. The control of defroster 110 will be described in detail later.

FIG. 2 shows a schematic configuration of an adhered substance detection apparatus 300 using the image capture device 200 disposed in the image capturing unit 101. The image capture device 200 includes, for example, a capture lens 204, an optical filter 205, a sensor board 207, and a signal processor 208. The sensor board 207 includes the image sensor 206 composed of a two-dimensional pixel array, which can be configured by arraying a number of light receiving elements in two dimensional directions. Each of light receiving elements of the image sensor 206 receives light having a given quantity, and the sensor board 207 outputs analog electrical signals corresponding to the received light quantity to the signal processor 208. Upon receiving the analog electrical signals, the signal processor 208 converts the analog electrical signals to digital electrical signals to generate and output the captured image data.

Further, a light source unit 210 disposed on the sensor board 207 is disposed at an inner face (one face or first face) side of the windshield 105, and the light source unit 210 can be used to detect substance adhered on an outer face (other face or second face) of the windshield 105, wherein the adhered substance (i.e., detection target object) is, for example, raindrops. The light source unit 210 can be used as a light irradiating unit.

In an example embodiment, the optical axis of the capture lens 204 is disposed in the image capturing unit 101 by aligning the optical axis of the capture lens 204 to the horizontal direction, but not limited hereto, but the optical axis of the capture lens 204 can be set to a given direction with respect to the horizontal direction (X direction in FIG. 2). The capture lens 204 can be configured with, for example, a plurality of lenses, and has a focal position set at a position far from the windshield 105. The focal position of the capture lens 204 can be set, for example, at infinity or between infinity and the windshield 105.

The optical filter 205 is disposed after the capture lens 204 to limit or regulate a wavelength range of light entering the image sensor 206. The optical filter 205 is used to suppress an effect of ambient light coming from the outside of the vehicle when detecting the condition of the windshield 105 using a reflection light, generated by reflection of light emitted from the light source unit 210 at the windshield 105. If the conditions of the windshield 105 can be detected with good enough detection precision, the optical filter 205 can be omitted.

The image sensor 206 is composed of a plurality of light receiving elements arranged two-dimensionally to receive light passing through the optical filter 205, and each light receiving elements (or image capturing pixel) has a function of photoelectric conversion of incident light. For example, the image sensor 206 is composed of about several hundreds of thousand of pixels arranged two-dimensionally. The image sensor 206 is a sensor employing, for example, a charge coupled device (CCD), a complementary metal oxide semiconductor (CMOS), or the like.

Light coming from the image capturing area, including an object (or detection-target object), passes the capture lens 204 and the optical filter 205, and then the image sensor 206 photoelectrically converts the received light to electrical signals based on the light quantity. When the signal processor 208 receives electrical signals such as analog signals (i.e., quantity of incident light to each of light receiving elements of the image sensor 206) output from the sensor board 207, the signal processor 208 converts the analog signals to digital signal to be used as captured image data. The signal processor 208 is electrically connected with the image analyzer 102. Upon receiving the electrical signals (analog signals) from the image sensor 206 via the sensor board 207, the signal processor 208 generates digital signals (captured image data), based on the received electrical signals, indicating luminance data for each image capturing pixel of the image sensor 206. The signal processor 208 outputs the captured image data to a later stage unit such as the image analyzer 102 with horizontal/vertical synchronization signals of image.

Further, the image analyzer 102 controls the image capturing operation of the image capturing unit 101, and analyzes captured image data transmitted from the image capturing unit 101. Based on the captured image data transmitted from the image capturing unit 101, the image analyzer 102 computes a preferable exposure value for each of target objects captured using the image sensor 206 such as other vehicles existing in a front direction of the vehicle 100, raindrops adhered on the windshield 105, freezing condition of the windshield 105, fogging condition on the windshield 105 or the like, and sets the preferable exposure value (e.g., exposure time) for each of the target objects captured using the image sensor 206. Further, the image analyzer 102 adjusts an emission timing of the light source unit 210 while linked with an exposure value adjustment. Further, the image analyzer 102 detects information such as road surface condition, road traffic signs, or the like from the captured image data transmitted from the image capturing unit 101. The image analyzer 102 may include a detection processor 102A and a light quantity adjuster 102B. The image analyzer 102 can be used to detect conditions of the windshield 105 (e.g., adhesion of raindrops, freezing, fogging) using the detection processor 102A. Image data captured by the image capturing device of the image capturing unit 101 is input to the image analyzer 102. The image analyzer 102 analyzes the captured image data, transmitted from the image capturing device, in which the image analyzer 102 can be used to compute information of other vehicles existing in a front direction of the vehicle 100 such as a vehicle position, a point of the compass (e.g., north, south, east, west), and distance to other vehicles. Further, the image analyzer 102 can adjust light quantity of light irradiated by the light source unit 210 by using the light quantity adjuster 102B.

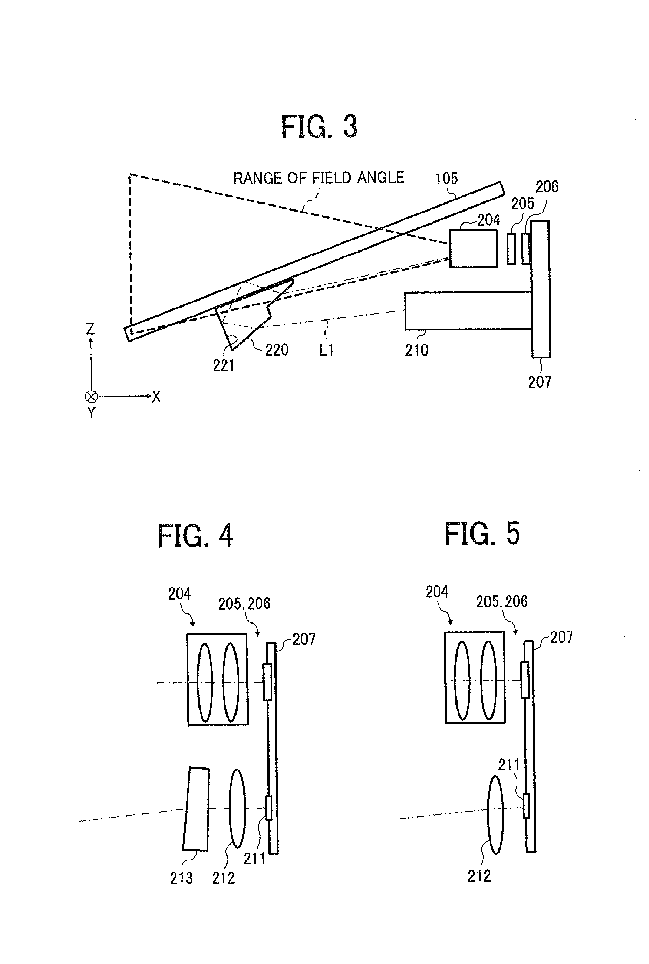

FIG. 3 shows an example of an optical system of the image capturing unit 101. The light source unit 210 irradiates light to detect foreign particles adhered on the windshield 105 (e.g., raindrops, freezing, fogging). The light source unit 210 includes a plurality of light emitting elements such as light emitting diodes (LED) but not limited hereto. By disposing a plurality of light emitting elements, a detection area of foreign particles on the windshield 105 can be enlarged, and detection precision of condition change of the windshield 105 can be enhanced compared to using one light emitting element.

In an example embodiment, the LEDs and the image sensor 206 are installed on the same sensor board 207, by which the numbers of board can be reduced compared to installing the LEDs and the image sensor 206 on different boards, by which less expensive cost can be achieved. Further, the LEDs can be arranged one row or a plurality of rows along the Y direction in FIG. 3. With this arrangement, the light used for capturing an image on the windshield 105, which is below an image area for displaying an image captured for a front direction of the vehicle 100, can be set as uniform light.

The light source unit 210 is disposed on the sensor board 207 to set a given angle between the optical axis direction of the light emitted from the light source unit 210 and the optical axis direction of the capture lens 204.

Further, the light source unit 210 is disposed at a position to set an irradiation area on the windshield 105 illuminated by the light emitted from the light source unit 210 is corresponded to a range of field angle (or a range of viewing angle) of the capture lens 204.

The light source unit 210 is composed of, for example, one or more light emitting diodes (LED) or laser diodes (LD). The emission wavelength of the light source unit 210 is preferably light other than the visible light so that drivers of oncoming vehicles and foot passengers are not dazzled. For example, light that has a wavelength window longer than a wavelength window of the visible light and can be sensed by the image sensor 206 is used. For example, infrared light having the wavelength window of 800 nm to 1000 nm can be used. The drive control of the light source unit 210 such as emission timing control may be conducted using the image analyzer 102 while linked with obtaining of image signals from the signal processor 208.

Conditions of reflection light reflected on the windshield 105 vary depending on the condition change of the windshield 105 (e.g., raindrops adhered on the outer face of the windshield 105, freezing portion that evening dew is frozen, fogging on the inner face of the windshield 105 due to moisture),. The conditions of reflection light can be determined by analyzing the captured image captured by the image sensor 206 via the optical filter 205.

By aligning the optical axis of the LED 211 of the light source unit 210 and a normal direction of the image sensor 206 of the image capture device 200 to the normal direction of the same sensor board 207, the manufacturing process can be simplified.

However, because the light irradiation direction of the light source unit 210 and the image capturing direction of the image capture device 200 (i.e., optical axis direction of the capture lens 204) are different directions, it is difficult to dispose the LED 211 of the light source unit 210 and the image sensor 206 of the image capture device 200 on the same sensor board 207 while setting different directions for the light irradiation direction of the light source unit 210 and the image capturing direction of the image capture device 200.

Therefore, when the LED 211 of the light source unit 210 and the image sensor 206 of the image capture device 200 are disposed on the same sensor board 207, for example, a light path changing member can be disposed on the light source unit 210 to change a light path of light emitted from the LED 211. The light path changing member is, for example, a deflection prism 213 as shown in FIG. 4, and a collimator lens 212 disposed eccentrically as shown in FIG. 5. The number of the collimator lens 212 is required to be the same of the number of the LED 211, in which a lens array arranging lenses in the Y direction can be used.

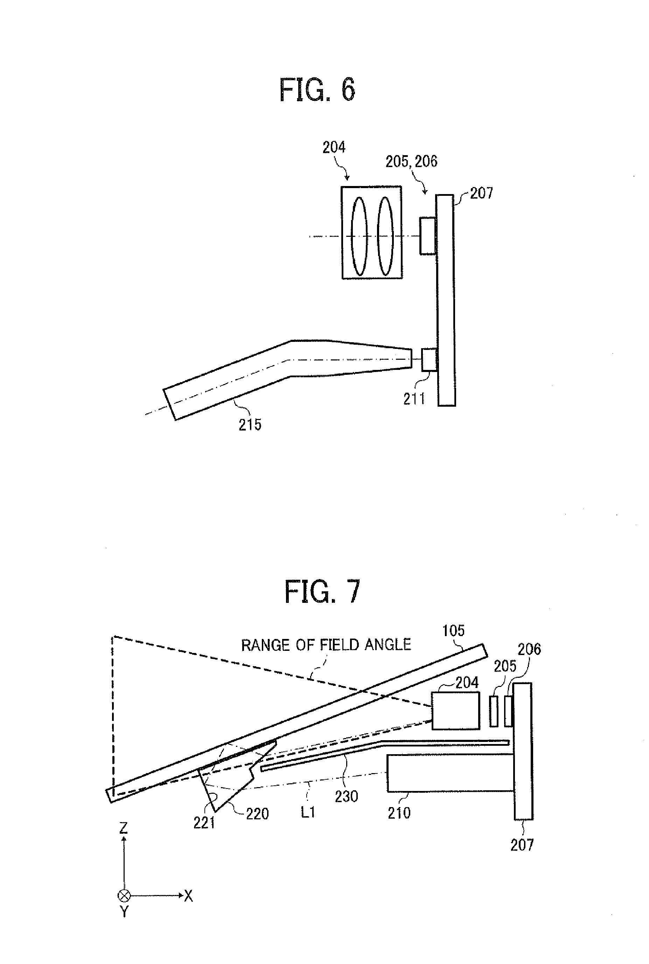

Further, a light guide member shown in FIG. 6 can be used as the light path changing member. In FIG. 6, a tapered light guide member such as a tapered light guide 215 is disposed at the exit side of a plurality of LEDs 211 installed on the sensor board 207. With this configuration, the light emitted from the LED 211 reflects on the inner face of the tapered light guide 215 while passing through the tapered light guide 215, and the light exits from the tapered light guide 215 while setting the light substantially parallel to the optical axis direction of the LED 211. Therefore, by disposing the tapered light guide 215, a radiation angle range of light can be set small.

Further, the exit side of the tapered light guide 215 is configured to direct the light emitted from the light source unit 210 to a desired direction. As for the configuration of FIG. 6, the light having a narrower illumination range and uniform light can be irradiated to a desired direction, by which conditions of the windshield 105 can be detected with high precision, and the processing load such as correction of uneven brightness can be reduced.

As described above, the light source unit 210 and the image sensor 206 are installed on the same sensor board 207, but the light source unit 210 and the image sensor 206 can be installed different boards.

As shown in FIG. 3, the image capturing unit 101 includes an optical member such as a reflective deflection prism 220 having a reflection face 221. The light emitted from the light source unit 210 can be reflected at the reflection face 221 and then guided to the windshield 105. The reflective deflection prism 220 has one face attached firmly to the inner face of the windshield 105 so that the light emitted from the light source unit 210 is guided to the windshield 105.

Specifically, the regular reflection reflected regularly on the reflection face 221 of the reflective deflection prism 220 is guided to the windshield 105. The reflective deflection prism 220 is attached to the inner face (first face) of the windshield 105 with a condition to maintain that a regular reflection light reflected regularly at a non-adhering area, where the detection target object such as raindrop does not adhere, on the outer face (second face) of the windshield 105, can be received by the image sensor 206 even when the incident angle of the light of the light source unit 210 entering the reflective deflection prism 220 changes within a given range.

When attaching the reflective deflection prism 220 to the inner face of the windshield 105, filler (i.e., light transmittable material) such as gel, sealing material, or the like is interposed between the reflective deflection prism 220 and the inner face of the windshield 105 to increase contact level. With this configuration, an air layer or bubble may not occur between the reflective deflection prism 220 and the windshield 105, by which the fogging may not occur between the reflective deflection prism 220 and the windshield 105.

Further, the refractive index of filler is preferably between the refractive indexes of the reflective deflection prism 220 and the windshield 105 to reduce Fresnel reflection loss between the filler and the reflective deflection prism 220, and the filler and the windshield 105. The Fresnel reflection is a reflection that occurs between materials having different refractive indexes.

As shown in FIG. 3, the reflective deflection prism 220 regularly reflects an incident light from the light source unit 210 for one time at the reflection face 221 to direct the reflection light to the inner face of the windshield 105. The reflection light can be configured to have an incidence angle $\theta$ (e.g., $\theta \geq$ about 42 degrees) with respect to the outer face of the windshield 105. This effective incidence angle $\theta$ is a critical angle that causes a total reflection on the outer face (second face) of the windshield 105 based on a difference of refractive indexes between air and the outer face of the windshield 105.

Therefore, in an example embodiment, when foreign particles such as raindrops do not adhere on the outer face (second face) of the windshield 105, the reflection light reflected at the reflection face 221 of the reflective deflection prism 220 does not pass through the outer face (second face) of the windshield 105 but totally reflected at the outer face (second face) of the windshield 105.

In contrast, when foreign particles such as raindrops having refractive index of 1.38, different from air having refractive index of 1, adhere on the outer face of the windshield 105, the total reflection condition does not occur, and the light passes through the outer face of the windshield 105 at a portion where raindrops adhere.

Therefore, the reflection light reflected at a non-adhering portion of the outer face of the windshield 105 where raindrops does not adhere is received by the image sensor 206 as an image having high intensity or luminance. In contrast, the quantity of the reflection light decreases at an adhering portion of the outer face of the windshield 105 where raindrops adhere, and thereby the light quantity received by the image sensor 206 decreases, and the reflection light is received by the image sensor 206 as an image having low intensity or luminance. Therefore, a contrast between the raindrop-adhering portion and the raindrop-non-adhering portion on the captured image can be obtained.

As shown in FIG. 7, a light block member 230 can be disposed between the light source unit 210 and the capture lens 204 to prevent intrusion of diffused light component of the light source unit 210 to the image sensor 206. If the diffused light enters the image sensor 206, image signals may deteriorate.

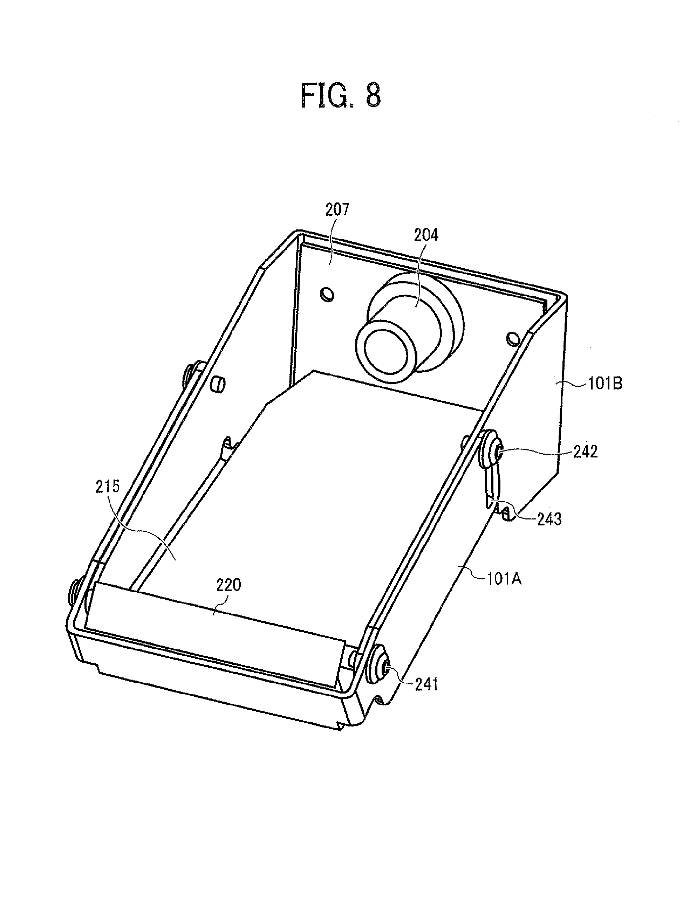

FIG. 8 shows a perspective view of schematic configurations of the image capturing unit 101. The image capturing unit 101 employs the light guide member shown in FIG. 6 as the light path changing member. The image capturing unit 101 includes, for example, a first module 101A and a second module 101B. The first module 101A, used as a first supporter, supports the reflective deflection prism 220 by fixing to the first module 101A, with which the reflective deflection prism 220 can be attached to the inner face of the windshield 105. The second module 101B, used as a second supporter, supports the sensor board 207 installed with the image sensor 206 and the LED 211, the tapered light guide 215, and the capture lens 204 by fixing each unit to the second module 101B.

The first and second modules 101A and 101B are linked pivotally by a rotation mechanism 240, which includes a rotation axis 241 extending in a direction perpendicular to both of the slanting direction and the vertical direction of the windshield 105, and the first module 101A and the second module 101B can be rotated or pivoted with each other about the rotation axis 241. This pivotable configuration is employed to set the image capturing direction of the image capture device 200 in the second module 101B to a specific target direction (e.g., horizontal direction) even if the first module 101A is fixed to the windshield 105 having different inclination angle.

The image capturing unit 101 having the above configuration can be installed to the vehicle 100 as follows. At first, the first module 101A is fixed to the windshield 105 while the one face of the reflective deflection prism 220 is attached firmly to the inner face of the windshield 105. The first module 101A can be fixed to the windshield 105 using, for example, adhesives, or a mechanism such as a hook fixed to the windshield 105 in which the first module 101A is engaged to the hook.

Then, the second module 101B is rotated about the rotation axis 241 of the rotation mechanism 240 with respect to the fixes first module 101A. The second module 101B is adjusted to a given angle so that the image capturing direction of the image capture device 200 in the second module 101B is matched to the horizontal direction, then the second module 101B is fixed to the vehicle 100.

In an example embodiment, a moveable range of a fixing pin 242 fixed on the outer wall of the second module 101B can be regulated by a guide hole 243 formed on the first module 101A, by which a rotation adjustment range of the rotation mechanism 240, that is the angle adjustment range of the second module 101B with respect to the first module 101A, is regulated. The rotation adjustment range of the rotation mechanism 240 can be set in view of an inclination angle range of the windshield 105.

In an example embodiment, the inclination angle range of the windshield 105 is set, for example, in a range of from about 20 degrees to 35 degrees, but the inclination angle range can be changed depending on the types of vehicles installing the image capturing unit 101.

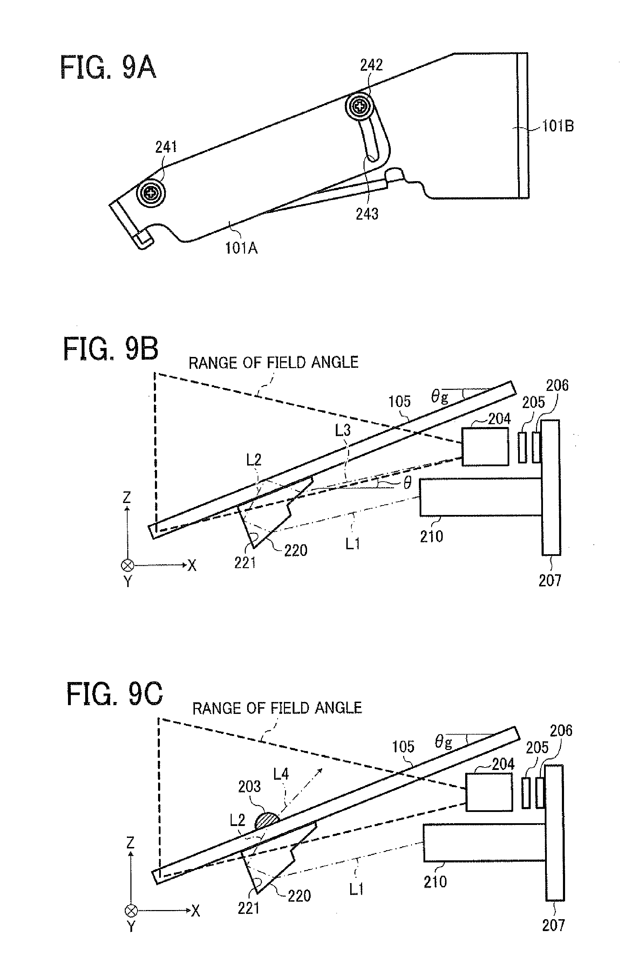

FIG. 9A shows a side view of the image capturing unit 101 attached to a vehicle having an inclination angle $\theta g$ of 22 degrees for the windshield 105 with respect to the horizontal direction. FIG. 9B shows an optical scheme of the image capturing unit 101 when raindrops do not adhere under the conditions shown FIG. 9A. FIG. 9C shows an optical scheme of the image capturing unit 101 when raindrops adhere under the conditions shown FIG. 9A.

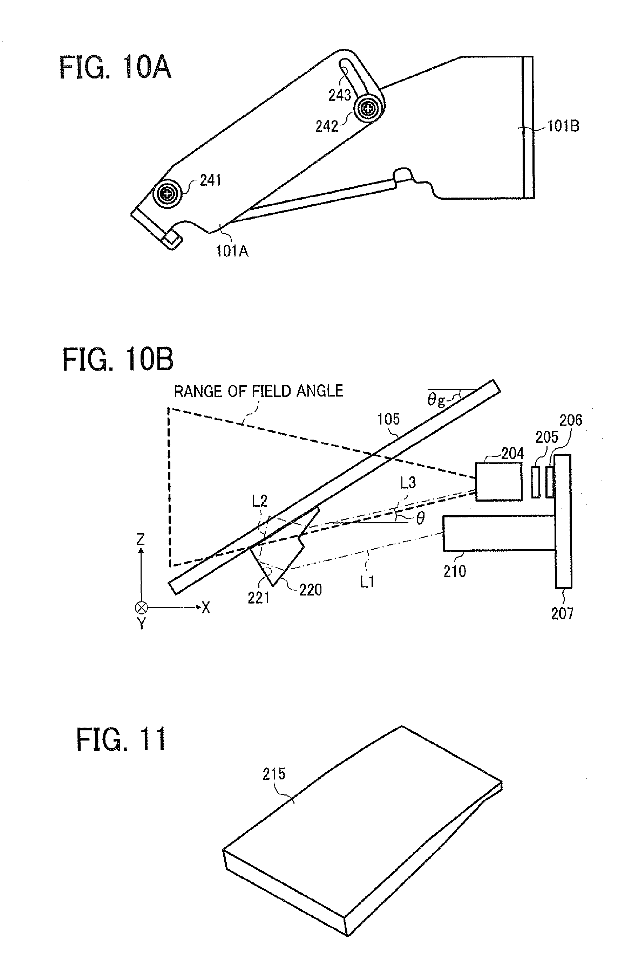

FIG. 10A schematically shows a side view of the image capturing unit 101 attached to a vehicle having an inclination angle $\theta g$ of 34 degrees for the windshield 105 with respect to the horizontal direction. FIG, 10B shows an optical scheme of the image capturing unit 101 when raindrops do not adhere under the conditions shown FIG. 10A.

Light L1 emitted from the light source unit 210 is regularly reflected on the reflection face 221 of the reflective deflection prism 220 as a reflection light L2, and the reflection light L2 passes through the inner face of the windshield 105. If raindrops do not adhere on the outer face of the windshield 105, the reflection light L2 totally reflects on the outer face of the windshield 105 as a reflection light L3, and the reflection light L3 passes through the inner face of the windshield 105 toward the capture lens 204.

In contrast, if raindrop 203 adheres on the outer face of the windshield 105, the reflection light L2 regularly reflected on the reflection face 221 of the reflective deflection prism 220 passes through the outer face of the windshield 105.

In such a configuration, if the inclination angle $\theta g$ of the windshield 105 is changed, a posture of the first module 101A attached to the inner face of the windshield 105 can be changed while maintaining a posture of the second module 101B (e.g., maintaining the image capturing direction to the horizontal direction), in which the reflective deflection prism 220 is rotated about the Y-axis in FIG. 9 in view of the inclination angle θg of the windshield 105.

In an example embodiment, a layout relationship of the reflection face 221 of the reflective deflection prism 220 and the outer face (second face) of the windshield 105 is set to a given configuration that the total reflection light L3 reflected at the outer face of the windshield 105 can be received constantly at a receiving area of the image sensor 206 used for detecting the change of conditions of the windshield 105 within the rotation adjustment range of the rotation mechanism 240. Hereinafter, this receiving area may be referred to as an adhered substance detection receiving area. Therefore, even if the inclination angle θg of the windshield 105 changes, the total reflection light L3 reflected at the outer face of the windshield 105 can be received by the adhered substance detection receiving area of the image sensor 206, by which a raindrops detection can be conducted effectively.

The layout relationship substantially satisfies the law of corner cube within the rotation adjustment range of the rotation mechanism 240. Therefore, even if the inclination angle θg of the windshield 105 changes, an angle θ defined by the optical axis direction of the total reflection light L3 reflected at the outer face of the windshield 105 and the horizontal direction is  substantially constant. Therefore, the optical axis of the total reflection light L3 reflected at the outer face of the windshield 105 can pass a portion of the adhered substance detection receiving area of the image sensor 206 with a small deviation, by which a raindrops detection can be conducted effectively further.

When a layout of the reflection face 221 of the reflective deflection prism 220 and the outer face of the windshield 105 has a perpendicular relationship, the law of corner cube is satisfied. If the law of corner cube is substantially satisfied within the rotation adjustment range of the rotation mechanism 240, the layout relationship of the reflection face 221 of the reflective deflection prism 220 and the outer face of the windshield 105 is not limited to the perpendicular relationship.

Even if the layout relationship of the reflection face 221 of the reflective deflection prism 220 and the outer face of the windshield 105 is not a perpendicular relationship, the angle θ defined for the optical axis of the total reflection light L3 going to the capture lens 204 can be substantially maintained at constant by adjusting an angle of other faces of the reflective deflection prism 220 (i.e., incident face and exit face), even if the inclination angle θg of the windshield 105 changes.

For example, if an angle defined by the reflection face 221 of the reflective deflection prism 220 and the outer face of the windshield 105 is set greater than 90 degrees, an angle defined by an exit face 224 and a contact face 222 of the reflective deflection prism 220 is set greater in view of the angle defined by the reflection face 221 and the outer face of the windshield 105, by which the angle θ of the optical axis of the total reflection light L3 going to the capture lens 204 can be substantially maintained at constant.

In this case, when the angle defined by the reflection face 221 of the reflective deflection prism 220 and the outer face of the windshield 105 is set greater than 90 degrees, the angle includes an exceeding angle corresponding an amount of angle greater than 90 degrees, in which the angle defined by the exit face 224 and the contact face 222 of the reflective deflection prism 220 is preferably increased for an amount which is about the two times of the exceeding angle.

In this case, the exit face 224 and the incidence face 223 of the reflective deflection prism 220 may not become parallel, but the reflective deflection prism 220 can be used by setting an exit angle of the light guide member in view of an exit angle of the reflective deflection prism 220 to the capture lens 204.

Further, if the law of corner cube is satisfied as described above, the angle θ defined by the optical axis direction of the total reflection light L3 reflected at the outer face of the windshield 105 and the horizontal direction can be substantially at constant, but an exit position of the total reflection light L3 exiting from the reflective deflection prism 220 may not be always the same position. If this exit position is changed, a portion of the adhered substance detection receiving area of the image sensor 206 where the optical axis of the total reflection light L3 can pass through deviates, by which effective raindrops detection may not be conducted.

Therefore, in an example embodiment, the rotation center position of the rotation mechanism 240 is devised so that the light receiving position of the image sensor 206 that receives the regular reflection light L3, regularly reflected on the outer face of the windshield 105, can be maintained in a defined light receiving area defined in advance within the rotation adjustment range of the rotation mechanism 240.

Specifically, the position of the rotation axis 241 of the rotation mechanism 240 is set at a given position so that the exit position of the total reflection light L3 from the reflective deflection prism 220 can be maintained at a substantially constant position in a range of field angle (a range of viewing angle) of the image capture device 200 within the rotation adjustment range of the rotation mechanism 240.

Specifically, the rotation axis 241 of the rotation mechanism 240 is disposed at, for example, between a position that the optical axis of the light L1 passes the reflection face 221 of the reflective deflection prism 220 and a position that the optical axis of the regular reflection light L2 passes the outer face of the windshield 105.

As described above, the image capturing unit 101 can be attached to the windshield 105 for any inclination angles of the windshield 105 by conducting two processes such as a fixing process of fixing the windshield 105 to the first module 101A, and a leveling process of fixing the second module 101B while adjusting the angle of the second module 101B for matching the image capturing direction to the horizontal direction.

FIG. 11 shows a perspective view of the tapered light guide 215. The tapered light guide 215 can include a taper rod lens at the incident side of tapered light guide 215, wherein the taper rod lens may include a mirror tube having an inner face as a reflection face. The tapered light guide 215 is tapered from an incident face side to an exit face side such as the exit face side is greater than the incident face side. The tapered light guide 215 is preferably made of materials having a refractive index of greater than one, for example, glass. The tapered light guide 215 can be manufactured with less expensive cost by using the molding process.

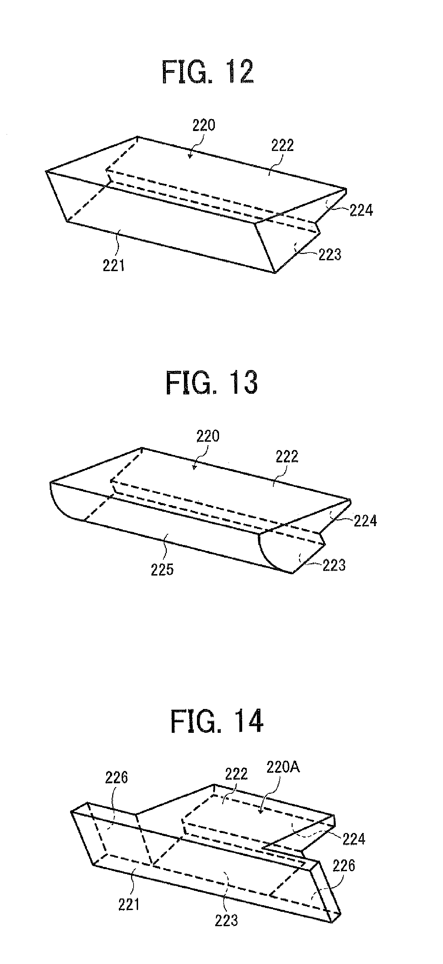

FIG. 12 shows a perspective view of the reflective deflection prism 220. The reflective deflection prism 220 includes the incidence face 223, the reflection face 221, the contact face 222 and the exit face 224. The light 1 emitting from the light source unit 210 enters the incidence face 223. The light L1 entering from the incidence face 223 is reflected on the reflection face 221. The contact face 222 is attached firmly to the inner face of the windshield 105. The reflection light L3 reflected at the outer face of the windshield 105 exits from the exit face 224 toward the image capture device 200. The incidence face 223 may be set in parallel to the exit face 224, but the incidence face 223 can be set not-in-parallel to the exit face 224.

The reflective deflection prism 220 can be made of materials that can pass through the light coming from the light source unit 210 such as glass, plastic, or the like. If the light coming from the light source unit 210 is infrared light, the reflective deflection prism 220 can be made of materials of dark color that can absorb visible lights. By employing materials that can absorb the visible light, it can reduce the intrusion of light (e.g., visible light from outside), which is other than the light coming from a LED (e.g., infrared light), to the reflective deflection prism 220.

Further, the reflective deflection prism 220 is formed to satisfy total reflection condition that can totally reflect the light coming from the light source unit 210 at the reflection face 221 within the rotation adjustment range of the rotation mechanism 240. Further, if it is difficult to satisfy total reflection condition at the reflection face 221 within the rotation adjustment range of the rotation mechanism 240, the reflection face 221 of the reflective deflection prism 220 can be formed with a layer of aluminum by vapor deposition to form a reflection mirror.

Further, although the reflection face 221 is a flat face, the reflection face can be a concave face such as a reflection face 225 as shown in FIG. 13. By using the concave reflection face 225, the diffused light flux entering the reflection face 225 can be set parallel light flux. With this configuration, the reduction of light quantity on the windshield 105 can be suppressed.

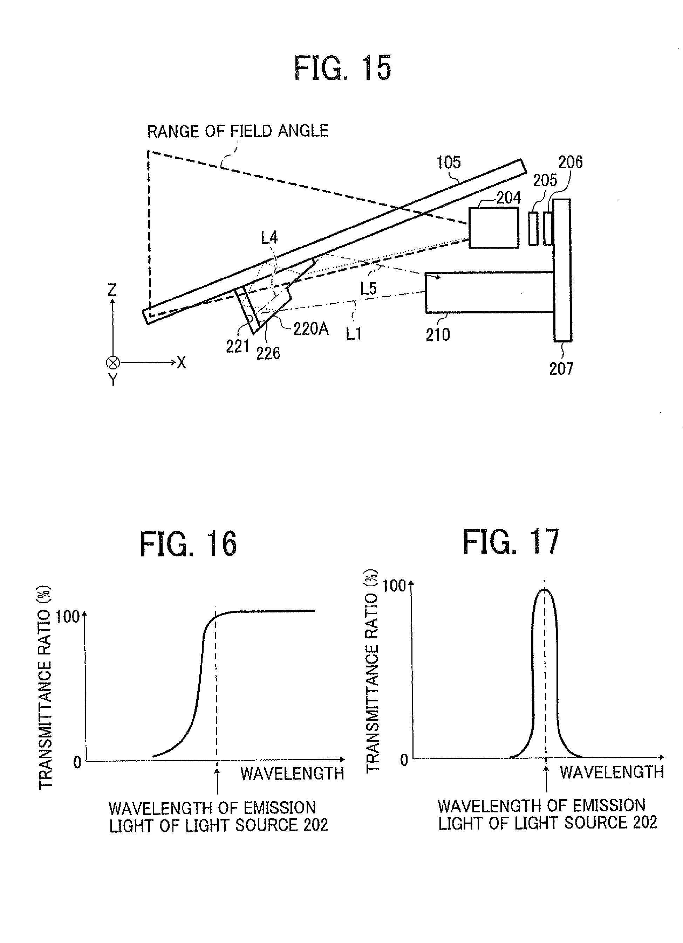

A description is given of variable configuration of the reflective deflection prism 220. FIG. 14 shows a perspective view of a reflective deflection prism 220A, which is a variable of the reflective deflection prism 220. FIG. 15 shows an optical system of the image capturing unit 101 using the reflective deflection prism 220A. The reflective deflection prism 220A can be used to detect raindrops adhered on the outer face (second face) of the windshield 105 and also to detect fogging adhered on the inner face (first face) of the windshield 105 using the light coming from the light guide member 215.

The reflective deflection prism 220A uses the light exiting from the light guide member 215 selectively. Similar to the above described case, the light corresponding to the center portion of the Y-axis direction enters the incidence face 223, reflects regularly on the reflection face 221, and totally reflects on a portion where raindrops does not adhere on the outer face of the windshield 105, and is then received by the image sensor 206. In contrast, the light corresponding to both end portion of the Y-axis direction does not enter the incidence face 223, but is totally reflected on a reflection mirror face 226 of the reflective deflection prism 220A as a total reflection light L4, and the reflection light L4 is then directed to the inner face of the windshield 105. If fogging does not adhere on the inner face of the windshield 105, the total reflection light L4 reflects on the inner face of the windshield 105 as a regular reflection light L5. It is configured that the regular reflection light L5 is not received by the image sensor 206 within the rotation adjustment range of the rotation mechanism 240.

If fogging adheres on the inner face of the windshield 105, the total reflection light L4 is reflected with a diffusing manner at the fogging portion, and the diffused reflection light is received by the image sensor 206. Therefore, if the an area of the image sensor 206 corresponding to the reflection mirror face 226 receives light having a given level of light quantity or more, it is determined that the diffused reflection light caused by fogging is received by the image sensor 206, by which the fogging of the inner face of the windshield 105 can be detected.

As for the variable reflective deflection prism 220A, the prism portion having the reflection face 221 used for detecting raindrops, and the mirror portion having the reflection mirror face 226 used for detecting fogging can be formed as one integrated unit, but can be formed as separate parts. Further, in this variable reflective deflection prism 220A, the mirror portions are disposed at both sides of the prism portion as shown in FIG. 14, but not limited hereto. For example, the mirror portion can be disposed at only one side of the prism portion, or at an upper or bottom of the prism portion.

A description is given of the optical filter 205 according to an example embodiment. When the image capture device 200 captures the infra-red light reflected from the windshield 105, the image sensor 206 of the image capture device 200 receives infra-red light emitted from the light source 210, and also ambient light coming as sun light including infra-red light. Such ambient light includes infra-red light having greater light quantity. To reduce the effect of the ambient light having greater light quantity to the infra-red light coming from the light source 210, the light emission quantity of the light source 210 may be set greater than that of the ambient light. However, it is difficult to devise the light source 210 having the greater light emission quantity.

In view of such problem, in the example embodiment, for example, a suitable cut-filter or a band-pass filter may be used. As shown in FIG. 16, a cut-filter that cuts light having a wavelength smaller than a wavelength of emission light of the light source unit 210 can be used. Further, as shown in FIG. 17, a band-pass filter that passes through light having a specific wavelength of emission light of the light source unit 210, substantially matched to the peak of transmittance ratio of the light of the light source unit 210, can be used. As such, the image sensor 206 can effectively receive light emitted from the light source 210 using these filters. By using these filters, light having a wavelength different from the wavelength of light emitted from the light source unit 210 can be removed. Therefore, the image sensor 206 can receive the light emitted from the light source unit 210 with quantity relatively greater than quantity of the ambient light. Therefore, without using the light source unit 210 having greater light emission intensity, the light emitted from the light source unit 210 can be effectively received by the image sensor 206 while reducing the effect of the ambient light.

In the example embodiment, the raindrop 203 on the windshield 105 is detected based on the captured image data, and furthermore, the front-running vehicle and the oncoming vehicle are detected, and the lane (e.g., white line) is also detected based on the captured image data. Therefore, if the light having a wavelength other than a wavelength of infra-red light emitted from the light source unit 210 is removed from an entire image, the image sensor 206 cannot receive light having a wavelength required to detect the front-running vehicle/oncoming vehicle and the lane, by which the detection of vehicle/oncoming vehicle and the lane cannot be conducted.

In view of such issue, in the example embodiment, an image area of captured image data is segmented to one detection image area used as an adhered substance detection image area, and another detection image area used as a vehicle detection image area. The adhered substance detection image area can be used to detect the raindrop 203 on the windshield 105. The vehicle detection image area can be used to detect the front-running vehicle/oncoming vehicle, and the lane (e.g., white line). Therefore, the optical filter 205 includes a filter that can remove light having a wavelength band, which is other than infra-red light emitted from the light source 210, wherein the filter is disposed for the optical filter 205 only for the adhered substance detection image area.

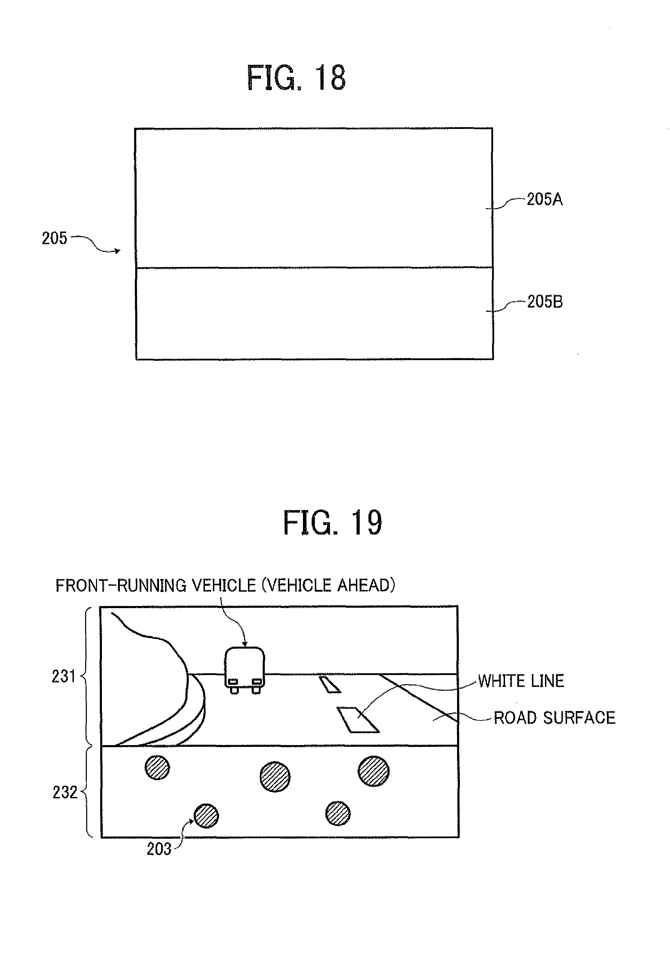

FIG. 18 shows a front view of the optical filter 205. As shown in FIG. 18, the optical filter 205 can be composed of a filter area for the vehicle detection image area, and a filter area for the adhered substance detection image area. FIG. 19 shows an example of image generated from captured image data. As shown in FIG. 19, the vehicle detection image area 231 may be an upper two-thirds (2/3) of one image capturing area. The adhered substance detection image area 232 may be a lower one-third (1/3) of one image capturing area. The image capturing area can be segmented into an upper part and a lower part. Typically, an image of headlight of the oncoming vehicle, an image of tail lamp of the front-running vehicle, and an image of the lane (e.g., white line) are present at the upper part of the image capturing area, while an image of road surface, which exists in the front-direction and very close to the vehicle 100, is present at the lower part of the image capturing area.

Therefore, information required to recognize or identify the headlight of the oncoming vehicle, the tail lamp of the front-running vehicle, and the lane is present mostly in the upper part of the image capturing area, and thereby information present in the lower part of the image capturing area may not be relevant for recognizing the oncoming vehicle, the front-running vehicle, and the lane. Therefore, when an object detection process such as detecting the oncoming vehicle, the front-running vehicle, and/or the lane, and a adhered substance detection are to be conducted concurrently based on the captured image data, the lower part of the image capturing area is corresponded to the adhered substance detection image area 232, and the upper part of the image capturing area is corresponded to the vehicle detection image area 231 as shown in FIG. 19. The optical filter 205 is preferably segmented into areas corresponding to the vehicle detection image area 231 and the adhered substance detection image area 232.

When the image capturing direction of the image capture device 200 is moved to a downward direction, a hood or bonnet of the vehicle 100 may appear at the lower part of the image capturing area. In such a case, sun light or the tail lamp of the front-running vehicle reflected on the hood of the vehicle 100 becomes ambient light. If the ambient light is included in the captured image data, the headlight of the oncoming vehicle, the tail lamp of the front-running vehicle, and the lane may not be recognized correctly.

In the example embodiment, because the cut-filter (FIG. 16) or the band-pass filter (FIG. 17) can be disposed at a position corresponding to the lower part of the image capturing area, the ambient light such as sun light, and the light of tail lamp of the front-running vehicle reflected from the hood can be removed. Therefore, the recognition precision of the headlight of the oncoming vehicle, the tail lamp of the front-running vehicle, and the lane can be enhanced.

The optical filter 205 includes a vehicle detection filter 205A corresponded to the vehicle detection image area 231, and an adhered substance detection filter 205B corresponded to the adhered substance detection image area 232, and the filters 205A and 205B have different layer structures. Specifically, the vehicle detection filter 205A does not include a light separation filter layer 251, but the adhered substance detection filter 205B includes the light separation filter layer 251.

Further, in the example embodiment, due to the optical property of the capture lens 204, the upside/downside of an image in the image capturing area and the upside/downside of an image in the image sensor 206 becomes opposite. Therefore, if the lower part of the image capturing area is used as the adhered substance detection image area 232, the upper part of the optical filter 205 may be configured as an adhered substance detection filter 205B.

The detection of the front-running vehicle can be conducted by recognizing the tail lamp of the front-running vehicle in the captured image. Compared to the headlight of the oncoming vehicle, the light quantity of the tail lamp is small. Further, ambient light such as streetlamp/streetlight or the like may exist in the image capturing area. Therefore, the tail lamp may not be detected with high precision if only the light quantity data is used.

To recognize the tail lamp effectively, spectrum information can be used. For example, based on received light quantity of the red-color light, the tail lamp can be recognized effectively. The optical filter 205 may be disposed with a red-color filter or cyan-color filter matched to a color of the tail lamp, which is a filter that can pass through only a wavelength band matched to a color used for the tail lamp, so that the received light quantity of the red-color light can be detected effectively.

However, each of the light receiving elements configuring the image sensor 206 may have sensitivity to infra-red light. Therefore, if the image sensor 206 receives light including infra-red light, the captured image may become red-color-like image as a whole. Then, it may become difficult to recognize a red-color image portion corresponding to the tail lamp. In view of such situation, in the example embodiment, the optical filter 205 includes a light separation filter layer 255 to be described later. By employing the light separation filter layer 255, the light corresponding from the visible light to light emitted from the light source can be removed from the captured image data.

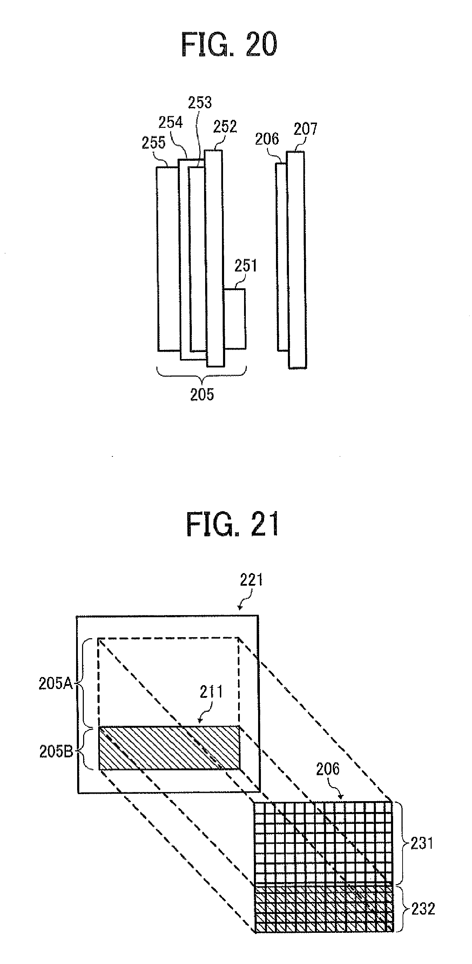

FIG. 20 shows a schematic configuration of the optical filter 205 and the image sensor 206 viewed from a direction perpendicular to a light transmission direction. FIG. 21 shows a relationship between the vehicle detection filter 205A and the adhered substance detection filter 205B of the optical filter 205, and the vehicle detection image area 231 and the adhered substance detection image area 232 on the image sensor 206.

The optical filter 205 is disposed near to the receiving face of the image sensor 206. As shown in FIG. 20, the optical filter 205 includes a transparent filter board 252. The light separation filter layer 251 is formed on one face of the transparent filter board 252 (as a face facing the receiving face of the image sensor 206), and a polarized-light filter layer 253 and the light separation filter layer 255 are formed with a given order on other face of the transparent filter board 252.

The optical filter 205 and the image sensor 206 can be bonded with each other, for example, by using ultraviolet (UV) adhesives. Further, a spacer can be disposed outside of an effective pixel area for image capturing between the optical filter 205 and the image sensor 206, and then sides of the outside of effective pixel area can be bonded by UV adhesives or heat pressing.

The optical filter 205 is explained further. The filter board 252 of the optical filter 205 can be made of translucent materials, for example, glass, sapphire, quartz, matched to the use wavelength area such as the visible light range and infrared light range in an example embodiment. In an example embodiment, for example, durable less expensive glass such as quartz glass having refractive index of 1. 46 and TEMPAX (registered trademark) glass having refractive index of 1. 51 can be used.

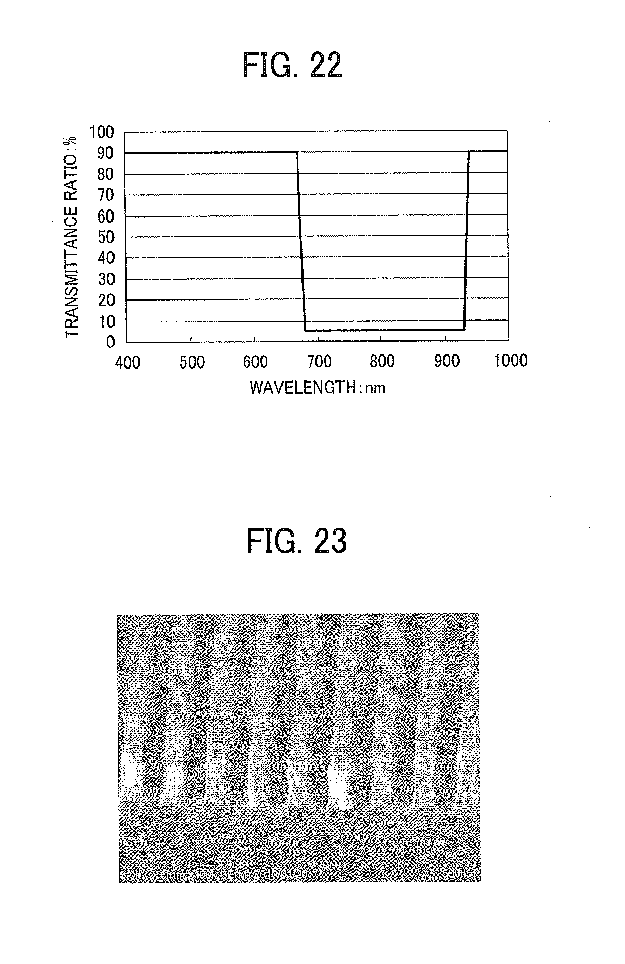

The light separation filter layer 255 of the optical filter 205 has transmittance property shown in FIG. 22. Specifically, the light separation filter layer 255 can pass through an incident light of visible light range having a wavelength window of from 400 nm to 670 nm, and an incident light of infrared light range having a wavelength window of from 940 nm to 970 nm, and cuts an incident light having a wavelength window of from 670 nm to 940 nm. The transmittance for the wavelength window of 400 nm to 670 nm and the wavelength window of 940 nm to 970 nm is preferably 30 % or more, and more preferably 90 % or more. The transmittance for the wavelength window of from 670 nm to 940 nm is preferably 20 % or less, and more preferably 5 % or less.

The incident light of visible light range can be used to detect vehicles and white lanes at the vehicle detection image area 231, and the incident light of infrared light range can be used to detect adhered substance such as raindrops on the windshield 105 at the adhered substance detection image area 232.

The incident light having a wavelength window of from 670 nm to 940 nm is cut (i.e., not passing through) because if the incident light having a wavelength window of from 670 nm to 940 is used, the image data becomes red as whole, by which it may become difficult extract the tail lamp and red-color signs having red color. In an example embodiment, because the light separation filter layer 255 cuts the incident light having a wavelength window of from 670 nm to 940 nm, the recognition precision of the tail lamp can be enhanced, and further, the detection precision of road traffic signs having red color such as "stop" sign used in for example Japan can be enhanced. The wavelength window from 940 nm to 970 nm, or the wavelength window from 400 nm to 670 nm are example wavelength window used for an example embodiment.

The light separation filter layer 255 has a multi-layered film structure formed by stacking thin films of high refractive index and thin films of low refractive index alternately. The multi-layered film structure can enhance design freedom of spectrum transmittance using interference of light, and if the thin films are stacked with a greater number, nearly 100 % reflection coefficient can be achieved for a specific wavelength (e.g. , wavelength other than infrared light).

The polarized-light filter layer 253 is disposed for the optical filter 205 to reduce noise caused by unnecessary reflection light. The light emitted from the light source unit 210 reflects on the inner face and outer face of the windshield 105, and the reflection light may enter the image capture device 200. This reflection light includes a polarized light component (horizontal polarized light component), which is perpendicular to a face such as the vertical face in an example embodiment defined by two optical axes such as an optical axis of the light emitted from the light source unit 210 and entering the windshield 105 and an optical axis of the capture lens 204, and this horizontal polarized light component is strong polarized light component. Therefore, the polarized-light filter layer 253 has a polarized-light filter to pass through the horizontal polarized light component and to cut a perpendicular polarized light component parallel to the vertical face.

The polarized-light filter 253 may be a polarizer having, for example, a wire grid structure shown in FIG. 23. The wire grid structure is formed by disposing a number of conductive metal wires with a given wire pitch in a given direction. For example, a number of the aluminum wires can be arranged with a given wire pitch in a given direction. By setting the wire pitch of the wire grid structure enough smaller than a wavelength of the incidence light (e.g., wavelength of visible light) such as one half (1/2) or less of wavelength of the incidence light, an electric field vector of light oscillating in parallel to the long side direction of metal wire can be mostly reflected, and electric field vector of light oscillating in perpendicular to the long side direction of metal wire can be mostly passed through, by which a polarizer that can generate single polarization light can be produced.

Typically, as for the polarizer having the wire grid structure, when the cross sectional area of the metal wire increases, the extinction ratio increases, and further if the metal wire has a greater width with respect to a pitch width, the transmittance ratio decreases. Further, if the cross sectional shape perpendicular to the long side direction of metal wire is a taper shape, the wavelength dispersing phenomenon for the transmittance ratio and the polarization level become small for broader wavelength range, and thereby a high extinction ratio may be set.

The wire grid structure can be formed using known semiconductor manufacturing process. Specifically, a thin film of aluminum is deposited on a translucent filter board, and then the patterning is conducted, and the sub-wavelength convex/concave structure of the wire grid is formed by the metal etching. By using such manufacturing process, the long side direction of metal wire, that is polarization light direction (i.e., polarization axis), can be adjusted with a size of image capture pixel of the image sensor 206 such as several $\mu$m level. Further, the wire grid structure can be formed of metal materials such as aluminum having good level of heat-resistance. Such wire grid structure can be preferably used under high temperature environment which may frequently occur inside vehicles or the like.

A filler agent is filled into the concave portions between the metal wires of wire grid and a space between the filter board 252 and the polarized-light filter layer 253 to form a filler layer 254. The filler agent may be preferably inorganic materials having a refractive index same or smaller than a refractive index of the filter board 252. Material used for the filler agent preferably has a low refractive index as close as the refractive index of "1" of air to prevent degradation of polarization property of the polarized-light filter layer 253. For example, porous ceramic materials having tiny holes dispersed in ceramics may be preferably used. Specifically, porous silica ($SiO_2$) porous magnesium fluoride (MgF), or porous alumina ($Al_2O_3$) can be used. The refractive index can be set based on the numbers and size (i.e., porous level) of holes in ceramics. If the main component of the filter board 252 is quartz or glass of silica, porous silica (n = 1.22 to 1.26) can be preferably used for the filler agent because the refractive index become smaller than the filter board 252.

The filler layer 254 can be formed by applying the inorganic filler agent using the spin on glass (SOG). Specifically, a solution prepared by solving silanol (Si$(OH)_4$) into alcohol is applied on the filter board 252 using the spin coating method. Then, the solvent is evaporated by applying heat, and the silanol is reacted under the dehydrogenative polymerization reaction process.

Because the polarized-light filter layer 253 employs the wire grid structure having a sub-wavelength size having a weak mechanical strength, which may be damaged by a small external force. The mechanical strength of the polarized-light filter layer 253 is weak compared to the light separation filter layer 255 formed on the filler layer 254.

Because the polarized-light filter layer 253 having a weak mechanical strength is covered and protected by the filler layer 254, damages to the wire grid structure of the polarized-light filter layer 253 can be reduced, suppressed, or prevented when installing the optical filter 205. Further, because the filler layer 254 is formed, an intrusion of foreign particles to the concave portions of the wire grid structure of the polarized-light filter layer 253 can be prevented.

Further, the height of the convex portion of wire grid structure of the polarized-light filter layer 253 is low such as one half or less of the wavelength for use, whereas the height of filter layer of the light separation filter layer 255 is high such as same or several times of the wavelength for use. Further, the greater the thickness of the light separation filter layer 255, the transmittance profile can be set sharp at a cut-wavelength. The greater the thickness of the filler layer 254, the harder to secure the flatness of the top face of the filler layer 254. Further, the greater the thickness of the filler layer 254, the harder to secure the even thickness of the filler layer. Therefore, too-thick filler layer is not preferable. In an example embodiment, the light separation filter layer 255 is formed on the filler layer 254 after covering the polarized-light filter layer 253 by the filler layer 254, in which the filler layer 254 can be formed stably. Further, the light separation filter layer 255 formed on the filler layer 254 can be formed with a preferable property.

In an example embodiment, the light separation filter layer 255, the filler layer 254, and the polarized-light filter layer 253 are disposed on the filter board 252 facing the capture lens 204. In general, it is important to minimize defects which may occur during the manufacturing process of these layers, and the allowable size of defect (i.e., allowable upper limit) becomes greater as farther from the image sensor 206. The filter board 252 may have a thickness of, for example, from 0.5 mm to 1 mm. By disposing the above mentioned layers are on the filter board 252 facing the capture lens 204, manufacturing process can be simplified, and manufacturing cost can be reduced compared to disposing the above mentioned layers on the filter board 252 facing the image sensor 206.

Further, in an example embodiment, the light separation filter layer 251 is formed on the filter board 252 facing the image sensor 206. The light separation filter layer 251 is disposed for the adhered substance detection filter 205B, but not disposed for the vehicle detection filter 205A.

As described above, if the infrared light reflected at the raindrops or freezing portion on the windshield 105 is to be detected as it is, the light source unit 210 that irradiates the infrared light may need to increase the light quantity greater than the ambient light having enormous light quantity, for example, the sunlight.

Therefore, in an example embodiment, a cut filter that can cut light having a wavelength smaller than the emission wavelength of the light source unit 210, or a band-pass filter having the transmittance peak substantially matched to the emission wavelength light source unit 210 can be disposed for the light separation filter layer 251, and the light separation filter layer 251 is formed for the adhered substance detection filter 205B.

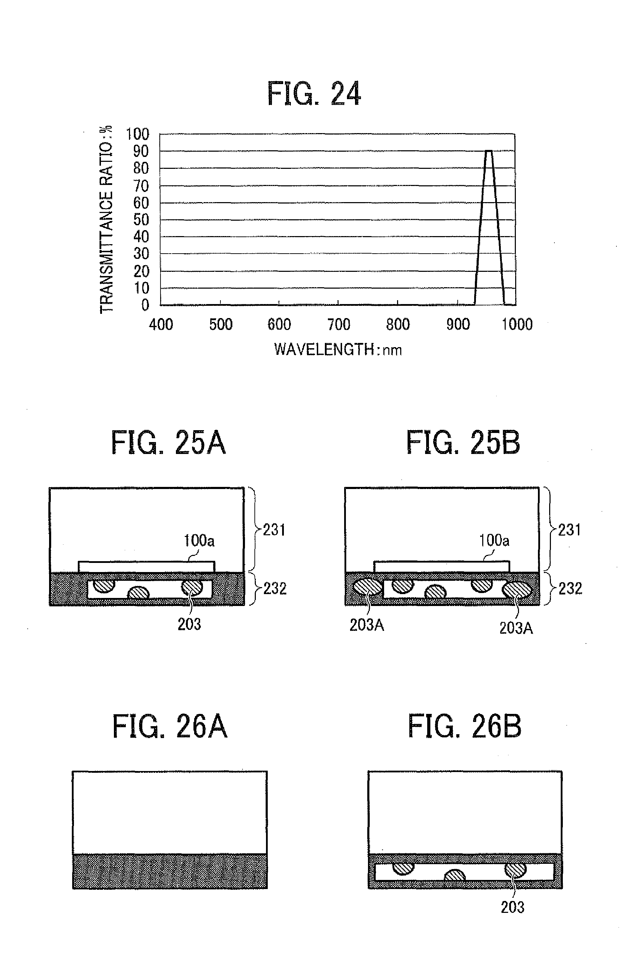

As shown in FIG. 24, the light separation filter layer 251 can employ a band-pass filter having the transmittance peak substantially matched to the emission wavelength light source unit 210. With this configuration, the ambient light, which is not the emission wavelength of the light source unit 210, can be removed, and the detected light quantity originally coming from the light source unit 210 can be relatively increased.

In an example embodiment, the optical filter 205 includes two light separation filter layers such as the light separation filter layers 251 and 255, and each of the light separation filter layers 251 and 255 is formed on the each of faces of the filter board 252, which are opposite faces of the filter board 252. With this configuration, warping of the optical filter 205 can be suppressed. If a multi-layered film structure is formed on only one face of the filter board 252, the warping of the optical filter 205 may occur due to stress. However, in an example embodiment, the multi-layered film structure is formed both faces of the filter board 252, by which each stress effect can be cancelled, by which the warping of the optical filter 205 can be suppressed.

The light separation filter layer 251 has a multi-layered film structure formed by stacking thin films of high refractive index and thin films of low refractive index alternately. The multi-layered film structure can enhance design freedom of spectrum transmittance using interference of light, and if the thin films are stacked with a greater number, nearly 100 % reflection coefficient can be achieved for a specific wavelength.

When depositing the light separation filter layer 251 using the vapor depositing, a mask is placed to cover a portion corresponding to the vehicle detection filter 205A so that the light separation filter layer 251 is not formed on the vehicle detection filter 205A while the light separation filter layer 251 can be formed on the adhered substance detection filter 205B.

In an example embodiment, by employing the multi-layered film structure for the light separation filter layers 251 and 255, any spectrum properties can be obtained. Typically, color filters used for color sensors are made of resist material. However, control of spectrum properties using the resist material is difficult compared to the multi-layered film structure. In an example embodiment, by employing the multi-layered film structure, the passing wavelength range of the light separation filter layers 251 and 255 can be substantially matched to the wavelength range of the light of the light source unit 210.

In an example embodiment, the light separation filter layer 251 is disposed for suppressing the ambient light because the raindrop can be detected effectively by reducing the effect of ambient light, in which fluctuation caused by noise can be suppressed. Further, raindrops can be detected without the light separation filter layer 251.

FIG. 25A show an example captured image using the reflective deflection prism 220A shown in FIG. 14, in which a condition composed of raindrops adhering and no-adhering of fogging is captured. FIG. 25B show an example captured image using the reflective deflection prism 220A shown in FIG. 14, in which a condition composed of raindrops adhering and fogging adhering is captured.

When the reflective deflection prism 220A is used, some of the light L1 emitted from the light source unit 210 regularly reflects on the outer face of the windshield 105 where the raindrops 203 does not adhere as the regular reflection light L3, and then the regular reflection light L3 is received at the center portion in left/right direction of the adhered substance detection image area 232, in which the portion receiving the light L3 becomes high luminance.

Further, when some of the light L1 emitted from the light source unit 210 strikes or enters the windshield 105 where the raindrops 203 adheres, the light does not reflect regularly on the outer face of the windshield 105, thereby the regular reflection light is not received at the center portion in left/right direction of the adhered substance detection image area 232, in which the portion not receiving the light becomes low luminance.

In contrast, because the both end portions in left/right direction of the adhered substance detection image area 232 does not receive the regular reflection light L5, the both end portions may be constantly at low luminance as shown in FIG. 25A. However, if fogging occurs on the inner face of the windshield 105, this fogging condition is assumed as adhering of small-sized water drops, and diffused reflection light occurs at a fogging area 203A. By receiving this diffused reflection light, the luminance of fogging portion becomes slightly greater than the luminance of no-fogging portion as shown in FIG. 25B.

If fogging adheres on the inner face of the windshield 105, a contour or edge of a hood 100a displayed on the vehicle detection image area 231 may be blurred. By using this blurred image, it can detect whether fogging occurs.

Even if the optical filter 205 is disposed as described above, some ambient light may pass through a band-pass range of the optical filter 205 because some ambient light may have the same emission wavelength of the light source unit 210, thereby the effect of ambient light cannot be removed completely. For example, during the day, infrared wavelength component of the sunlight affects as ambient light, and at night, infrared wavelength component included in headlight of oncoming vehicles affects as the ambient light. These ambient lights may cause a false detection when detecting the raindrops 203.

For example, an algorithm to detect the raindrops 203 is employed, in which the algorithm is used to determine that raindrops adheres at a portion where a luminance value on the adhered substance detection image area 232 changes greater than a given level. However, a false detection of raindrops may occur if the luminance value is offset by the effect of ambient light.

This false detection can be prevented by controlling a light-ON timing of the light source unit 210. For example, the light-ON timing of the light source unit 210 is synchronized to an exposure timing of the image sensor 206. Specifically, an image is captured when the light source unit 210 is set light-ON and an image is captured when the light source unit 210 is set light-OFF for the adhered substance detection image area 232 to generate a difference image of the two captured images, and then the raindrops detection is conducted based on the difference image. Therefore, in this method, at least two frames of captured image are used to detect raindrops.

The two frames used for detecting raindrops can be captured as follows. One frame (first frame) is captured when the light source unit 210 is set light-OFF as shown in FIG. 26A, and other frame (second frame) is captured when the light source unit 210 is set light-ON as shown in FIG. 26B.

When the light source unit 210 is set light-OFF, only an image of ambient light is captured for the adhered substance detection image area 232, whereas when the light source unit 210 is set light-ON, an image caused by ambient light and an image caused by the light source unit 210 are captured for the adhered substance detection image area 232. Therefore, luminance value (pixel value of difference image) that can be obtained by computing a difference of luminance between the two frames can remove the ambient light. By conducting the raindrops detection based on this difference image, the false detection caused by ambient light can be suppressed. Further, by setting the light-OFF for the light source unit 210 except at the light-ON timing of the light source unit 210 to detect raindrops, power consumption can be reduced preferably.

Among the ambient light, the sunlight may not change greatly along the timeline, but the light of headlight of oncoming vehicles receivable when the vehicle 100 is running may change greatly within a very short period of time. In this case, if a time interval between the two frames to obtain the difference image is long, the value of ambient light may change during the time interval, in which when the difference image is generated, the ambient light may not be cancelled effectively. To prevent this situation, the two frames used for obtaining the difference image are preferably consecutively captured frames.

In an example embodiment, when a normal frame to be used for image information for the vehicle detection image area 231 is captured, an automatic exposure control (AEC) is conducted based on luminance value for the vehicle detection image area 231 while the light source unit 210 is set light-OFF. At a given timing when capturing the normal frames, the two frames used for raindrops detection are consecutively captured between the normal frames. When the two frames are captured, the exposure control suitable for raindrops detection is conducted instead of the AEC used for capturing the normal frames.

Further, when the vehicle control and light beam orientation control are conducted based on image information of the vehicle detection image area 231, the automatic exposure control (AEC) is conducted based on the luminance value at the center of captured image.

However, when capturing the two frames used for detecting raindrops, an exposure control suitable for the raindrops detection is preferably conducted. If the AEC is conducted when capturing the two frames used for the raindrops detection, an exposure time for capturing a frame when the light source unit 210 is set light-ON and an exposure time for capturing a frame when the light source unit 210 is set light-OFF may change. If the exposure time differs between the two frames, luminance value of the ambient light included in each of the frames may change, by which the ambient light cannot be cancelled suitably using the difference image. Therefore, the exposure control for the two frames used for detecting raindrops can be conducted, for example, by using the same exposure time for the two frames.

Further, instead of using the same exposure time for the two frames, the difference image can be generated by correcting a difference of exposure time using an image processing. Specifically, when an exposure time for a frame captured when the light source unit 210 is set light-ON is referred to as the exposure time Ta, and an exposure time for a frame captured when the light source unit 210 is set light-OFF referred to as the exposure time Tb, as shown in following formulas (1) to (3), the luminance value Ya for the light-ON frame and the luminance value Yb for the light-OFF frame are divided by respective exposure time to computes a difference value Yr. By using the corrected difference image, even if the exposure time between the two frames may be different, the effect of ambient light can be removed effectively without an effect of the difference exposure time.

$$YA = Ya/Ta \cdots (1)$$

$$YB = Yb/Tb \cdots (2)$$

$$Yr = YA - YB \cdots (3)$$

Further, instead of using the same exposure time for the two frames, the difference image can be generated by controlling irradiation light quantity of the light source unit 210 depending on the difference of exposure time. In this method, the irradiation light quantity of the light source unit 210 is decreased for a frame having a long exposure time, by which without an effect of the different exposure time, the effect of ambient light can be removed effectively using the difference image of the two frames having different exposure time. Further, the above described correction using the image processing may increase the processing load, which may not be preferable, whereas this method of controlling irradiation light quantity does not need the correction by the image processing.

Further, the light emission output of LED 211 used as the light emitting element of the light source unit 210 changes when temperature changes. Specifically, when temperature increases, the light emission output of the light source unit 210 may decrease. Further, the light emission quantity of the LED 211 may decrease due to aging. If the light emission output of the light source unit 210 changes or varies, such change may be recognized that luminance value changes even if raindrops does not adhere, by which a false detection of raindrops may occur. To suppress the effect of light emission output change of the LED 211, in an example embodiment, it is determined whether the light emission output of the LED 211 changes, and if it is determined that the light emission output of the LED 211 changes, and the light emission output of the LED 211 is increased.

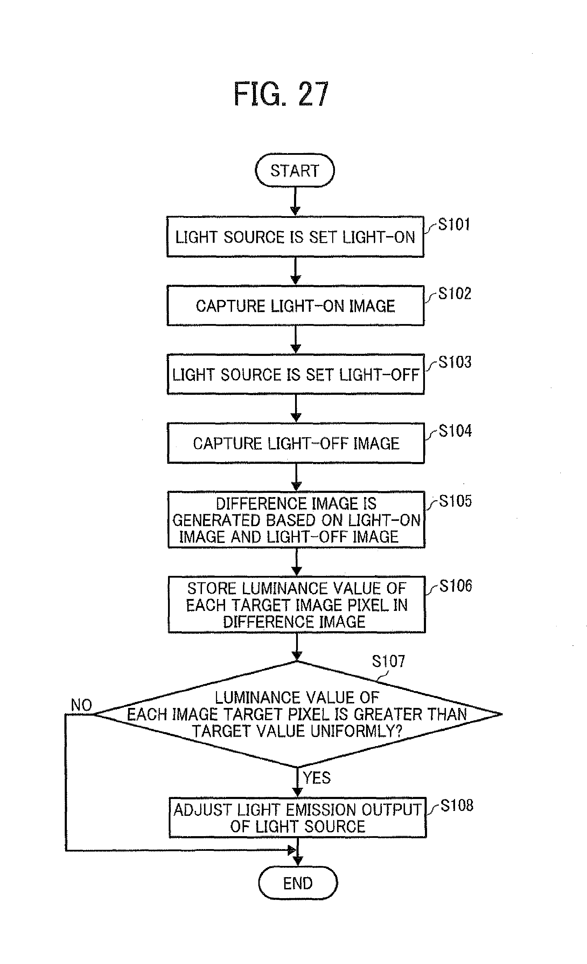

FIG. 27 shows a flowchart of a process of adjustment of the light emission output of the light source unit 210 conduct-able by the light quantity adjuster 102B of the image analyzer 102. When the adjustment timing has come, the light source unit 210 is set light-ON (S101), and an image is captured as a light-ON image (S102). Then, the light source unit 210 is set light-OFF (S103), and an image is captured as a light-OFF image (S104). Then, a difference image is generated based on the light-ON image for the adhered substance detection image area 232 and the light-OFF image for the adhered substance detection image area 232 (S105).

As described above, when the light source unit 210 is set light-OFF, only an image of ambient light is captured for the adhered substance detection image area 232 whereas when the light source unit 210 is set light-ON, an image caused by ambient light and an image caused by the light source unit 210 are captured for the adhered substance detection image area 232.

Therefore, luminance value (pixel value of difference image) that can be obtained by computing a difference of luminance between the two frames can remove the ambient light, and the luminance value includes only the light originated from the light source unit 210.

In an example embodiment, by using the luminance value of this difference image, the effect of ambient light can be removed, and the received light quantity originated from the light source unit 210 can be detected with high precision.

To remove the effect of ambient light with high precision, a capturing timing of the light-ON image and a capturing timing of the light-OFF image are preferably close as much as possible. Therefore, in an example embodiment, the light-ON image and the light-OFF image are captured as two consecutive frames.

The above generated difference image may be composed of a given number of target image pixels. For the given number of target image pixels included in the above generated difference image, luminance value of each of the target image pixels is stored (S106). The given number of target image pixels may be a group of pixels adjacent with each other, or a group of pixels spaced apart with each other.

In an example embodiment, the given number of target image pixels can be determined as follows. The light source unit 210 is composed of a plurality of LEDs, and it may be designed that the light emission output of each one of LEDs is adjustable. To enable adjustment of light emission output of each one of LEDs, the given number of target image pixels corresponds to one image capturing pixel used as a center pixel and other image capturing pixels surrounding the center pixel, in which the optical axis of irradiated light from a LED enters the center pixel, and the surrounding image capturing pixels irradiated light from the LED. Further, if the adjustment of light emission output is not conducted for each one of LEDs, any one of area irradiated by one LED can be used for adjustment of the light source unit 210.

The given number of target image pixels is, at least, set greater than the number of image capturing pixels matched to an expected size of the detection target object such as raindrops. Although the size of raindrops may vary, the upper limit of the size of raindrops can be determined such as image capturing pixels of 30 × 30 pixels or so. Therefore, in an example e embodiment, the given number of target image pixels is set, for example, image capturing pixels of 50 × 50 pixels by setting some margin. The image capturing pixel mean each one of pixels of an image sensor composed of a given number of pixels (e.g., 752 × 480 pixels) whereas the target image pixel mean a pixel used for storing the above luminance value (S106), and the target image pixels may use a part or all of pixels of the image sensor.

Then, it is determined whether the luminance values of the target image pixels stored in a storage at S106 is greater than a target value for a control value or more substantially uniformly (S107). Specifically, for example, a difference (in absolute value) between the luminance value of each target image pixel and the target value is computed for each one of the target image pixels, and it is determined whether the difference exceeds the control value. If the number of data having difference value exceeding the control value is a given number (e.g., 95 %) or more, and the difference value variance (or standard deviation) is a given value or less, it is determined that the luminance values of the target image pixels, stored in the storage at S106, exceed the target image pixels more than the control value substantially uniformly. In this example case, the target value corresponds to a luminance value at each target image pixel when the entire irradiated light having a target light emission output, emitted from the light source unit 210, is totally reflected on the outer face of the windshield 105, and then the reflection light from the windshield 105 enters the image sensor 206.

When raindrops adhere on the windshield 105, the luminance value of a part of target image pixels among the given number of target image pixels becomes smaller than the target value due to the adhesion of raindrops. In this case, because the luminance value of the other remaining target image pixels is close to the target value, the luminance value of the given number of target image pixels does not become substantially uniformly.

In contrast, when raindrops do not adhere on the windshield 105, the luminance value of all of the given number of target image pixels is close to the target value. If the light emission output of LED of the light source unit 210 is maintained at the target light emission output (i.e., within an allowable range of target light emission output), a deviation (i.e., difference value) between the luminance value of each target image pixel and the target value is small (i.e., within an allowable range). Therefore, the luminance value of the given number of target image pixels becomes substantially uniformly, and does not exceed the target value more than the control value.

Further, when raindrops do not adhere on the windshield 105 and the light emission output of LED of the light source unit 210 is deviated from the target light emission output (i.e., exceeding the allowable range of the target light emission output), a deviation (difference value) between the luminance value of each target image pixel and the target value becomes the control value or more (i.e., exceeding the allowable range). Therefore, the luminance value of the given number of target image pixels exceeds the target value more than the control value substantially uniformly.

When the luminance value of the given number of target image pixels exceeds the target value more than the control value substantially uniformly, it is determined that the light emission output of LED of the light source unit 210 is deviated from the target light emission output, and then the light emission output of LED of the light source unit 210 is adjusted (S108). In this adjustment, a drive current supplied to the LED of the light source unit 210 is controlled so that the luminance value of the target image pixels becomes close to the target value. Therefore, if the light emission output of LED decreases due to LED aging and/or LED temperature increase, and the luminance value of the given number of target image pixels becomes lower than the target value more than the control value substantially uniformly, the drive current is increased.

Further, if the light emission output of LED increases due to LED temperature decrease, the light emission output of LED increases, and then the luminance value of the given number of target image pixels exceeds the target value more than the control value substantially uniformly, the drive current is decreased.

Further, the entire windshield 105 may be wet by water due to sudden heavy rains or splash such as spray of water raised by other vehicle. In this case, the luminance value of the entire given number of target image pixels becomes lower than the target value substantially uniformly. In this case, the luminance value of the given number of target image pixels exceeds the target value more than the control value substantially uniformly, and even if the light emission output of LED of the light source unit 210 is maintained at the target light emission output, an adjustment of the light emission output is conducted, by which the light emission output of LED of the light source unit 210 may be inadvertently deviated from the target light emission output.

If it is assumed that such situation may occur, the following process can be conducted. For example, after it is determined that the luminance value of the given number of target image pixels exceeds the target value for more than the control value substantially uniformly, the wiper 107, which is a cleaning device, is operated to remove substance adhering on the outer face of the windshield 105. Then, right after the cleaning, the above described S101 to S107 can be conducted again, and it is determined whether the luminance value of the given number of target image pixels exceeds the target value for more than the control value substantially unifonnly.

If it is determined that the luminance value of the given number of target image pixels exceeds the target value for more than the control value substantially uniformly, the adjustment of light emission output of LED of the light source unit 210 is conducted. If the adjustment of the light emission output of LED of the light source unit 210 is conducted based on a determination result obtained after the operation of the wiper 107, the light emission output of LED of the light source unit 210 can be adjusted further effectively because the windshield 105 is not wet by water.

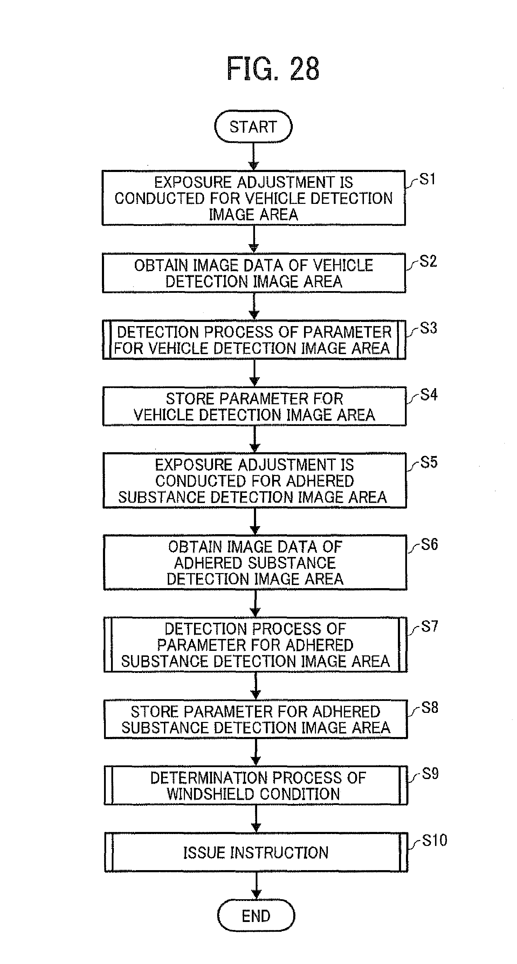

A description is given of a process of detecting conditions of the windshield 105 with reference to FIG. 28. FIG. 28 shows a flowchart of a process of detecting conditions of the windshield 105 conduct-able by the detection processor 102A of the image analyzer 102. Compared to the vehicle detection filter 205A not having the light separation filter layer 251, the adhered substance detection filter 205B having the light separation filter layer 251 receives light with a smaller light quantity. Therefore, the light quantity passing through the adhered substance detection filter 205B and the light quantity passing through the vehicle detection filter 205A have a greater difference.

Therefore, an image capturing condition (e.g., exposure value) matched to the vehicle detection image area 231 corresponding to the vehicle detection filter 205A, and an image capturing condition (e.g., exposure value) matched to the adhered substance detection image area 232 corresponding to the adhered substance detection filter 205B have a greater difference.

Therefore, in an example embodiment, different exposure values are used for capturing an image for the vehicle detection image area 231 (used for vehicle detection) and capturing an image for the adhered substance detection image area 232 (used for adhered substance detection).

For example, the adjustment of exposure value for detecting vehicles can be conducted by conducting an automatic exposure adjustment based on an output of the image sensor 206 corresponding to the vehicle detection image area 231 (S1) while the adjustment of exposure value for adhered substance detection image area 232 can be adjusted to a given set exposure value (S5). The exposure value can be changed, for example, by changing the exposure time. The exposure time can be changed, for example, by controlling the time duration for converting the light quantity received by the image sensor 206 to electrical signals by using the image analyzer 102.

The vehicle detection image area 231 is used for capturing an image around the vehicle 100. Because the lighting condition around the vehicle changes greatly such as from several tens of thousand lux (lx) during the day to one lux or less at night, the received light quantity changes greatly depending on image capturing scenes. Therefore, the exposure time is required to be adjusted based on the image capturing scenes. For example, it may be preferable to adjust the exposure value for the vehicle detection image area 231 using the known automatic exposure control (AEC).

In contrast, an image for the adhered substance detection image area 232 is captured by receiving the light emitted having a given constant light quantity from the light source unit 210 through the optical filter 205 having a given transmittance, in which the received light quantity changes a little. Therefore, the automatic adjustment of exposure value is not conducted for the adhered substance detection image area 232, and an image for the adhered substance detection image area 232 can be captured using a set exposure time. By using the set exposure time, the control time of exposure value can be shortened, and the exposure value control can be simplified.

In an example embodiment, upon conducting the exposure adjustment for the vehicle detection image area 231 (S1), the image analyzer 102 obtains image data of the vehicle detection image area 231 (S2). Image data of the vehicle detection image area 231 can be used to detect vehicles, lanes (e.g., white line), road traffic signs, and also used for the wiper control and the defroster control to be described later. Therefore, upon obtaining the image data of the vehicle detection image area 231, the image analyzer 102 detects parameter for the wiper control and the defroster control (S3), and stores the parameter to a given storage area (S4).

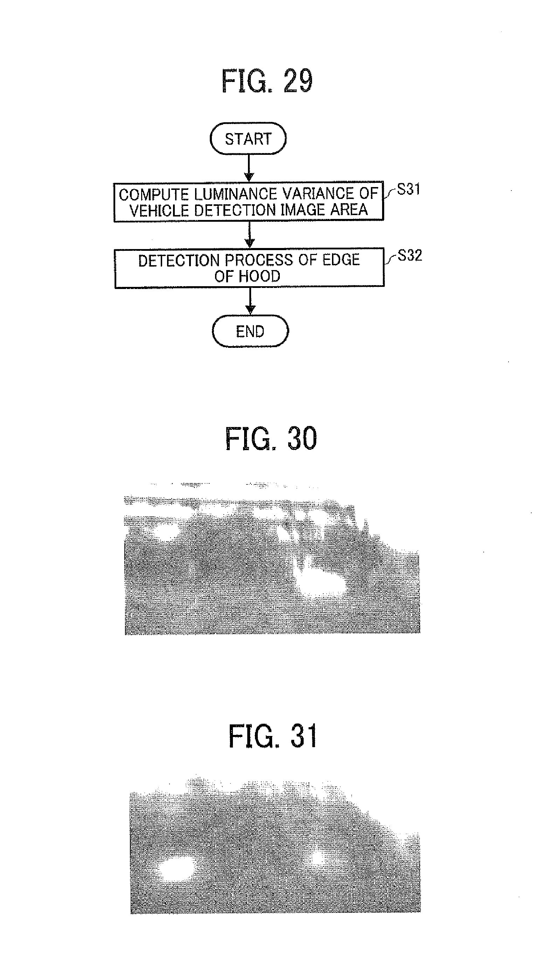

FIG. 29 shows a flowchart of a process of detecting parameters for the wiper control and the defroster control from the image data of the vehicle detection image area 231. In an example embodiment, the value of luminance variance for the vehicle detection image area 231 is used for detecting the parameter for the wiper control and the defroster control (S31). Further, an image capturing area is set so that an edge portion between a hood of the vehicle 100 and a background can be detected, and a result of an edge extraction of the hood is also used as a parameter (S32).

When the windshield 105 is fogged as shown in FIG. 30 or when the windshield 105 is freezing as shown in FIG. 31, the luminance variance for an image of the vehicle detection image area 231 becomes small. Therefore, the luminance variance for the vehicle detection image area 231 can be effectively used to detect whether the windshield 105 is fogged up or freezing. Further, if the windshield 105 is fogged up or freezing, an extraction of the edge portion of the hood becomes difficult. Therefore, information whether the edge portion of the hood is extracted can be effectively used to detect whether the windshield 105 is fogged up or freezing.

Then, the exposure adjustment (e.g., exposure time adjustment) for the adhered substance detection image area 232 is conducted in view of the light power of the light source unit 210 and spectrum properties of the light separation filter layer 251 of the optical filter 205 (S5). Then, the image analyzer 102 obtains image data of the adhered substance detection image area 232 (S6). Then, the image analyzer 102 detects parameter for the wiper control and the defroster control using the image data of the adhered substance detection image area 232 (S7), and stores the parameter to a given storage area (S8).

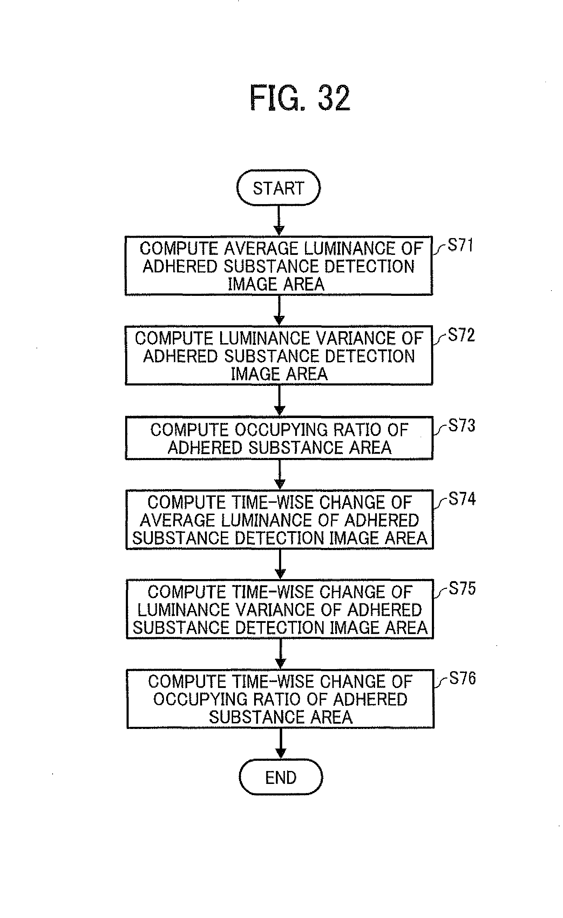

FIG. 32 shows a flowchart of a process of detecting parameters for the wiper control and the defroster control from the image data of the adhered substance detection image area 232. In an example embodiment, the average luminance value for the adhered substance detection image area 232 is computed and used as a parameter for the wiper control and the defroster control (S71). If the windshield 105 is adhered with raindrops, fogging or freezing portion, the average luminance value for the adhered substance detection image area 232 decreases. Therefore, it can detect whether the adhered substance (e.g., raindrops, fogging, freezing) adheres based on the average luminance value of the adhered substance detection image area 232.

Further, in an example embodiment, the luminance variance value for the adhered substance detection image area 232 is computed and used as a parameter for the wiper control and the defroster control (S72). If a size of raindrops is small (e.g., light rain), a total area of raindrops captured on the adhered substance detection image area 232 is small, and the luminance variance value may not change so much compared to a case that the adhered substance does not adhere on the windshield 105.

However, if raindrops having relatively greater size adhere on the windshield 105 with an increased number of raindrops, the luminance variance value becomes small because blurred images of raindrops are superimposed. Further, when the windshield 105 is fogged up or is freezing, the luminance variance value becomes also small. Therefore, it can detect whether adhered substance adhered on the windshield 105 is a level of light rain based on the luminance variance value for the adhered substance detection image area 232.

Further, in an example embodiment, the occupying ratio of adhered substance area on the adhered substance detection image area 232 is computed and used as a parameter for detecting the wiper control and the defroster control (S73). The adhered substance area ratio on the adhered substance detection image area 232 is a ratio of the number of pixels (image area), having the average luminance value exceeding the control value, with respect to the total number of pixels (total area) of the adhered substance detection image area 232.

Because the occupying ratio of adhered substance area of fogging portion and freezing portion is typically large, based on the occupying ratio of adhered substance area on the adhered substance detection image area 232, it can detect whether adhered substance adhered on the windshield 105 is fogging and freezing but not at level of light rain.

Further, in an example embodiment, time-wise change of the above described average luminance, luminance variance and the occupying ratio of adhered substance area can be detected as the parameter for the wiper control and the defroster control (S74 to S76). The time-wise change is an amount changed from image data of the adhered substance detection image area 232 captured last time to image data of the adhered substance detection image area 232 captured current time. The freezing or fogging cannot increase rapidly in a short period of time, but the splash (spray of water raised by other vehicles) adhering the windshield 105 can increase rapidly in a short period of time. Therefore, based on the time-wise change of the average luminance for the adhered substance detection image area 232, luminance variance for the adhered substance detection image area 232, and the occupying ratio of adhered substance area, it can detect whether adhered substance adhered on the windshield 105 is splash.

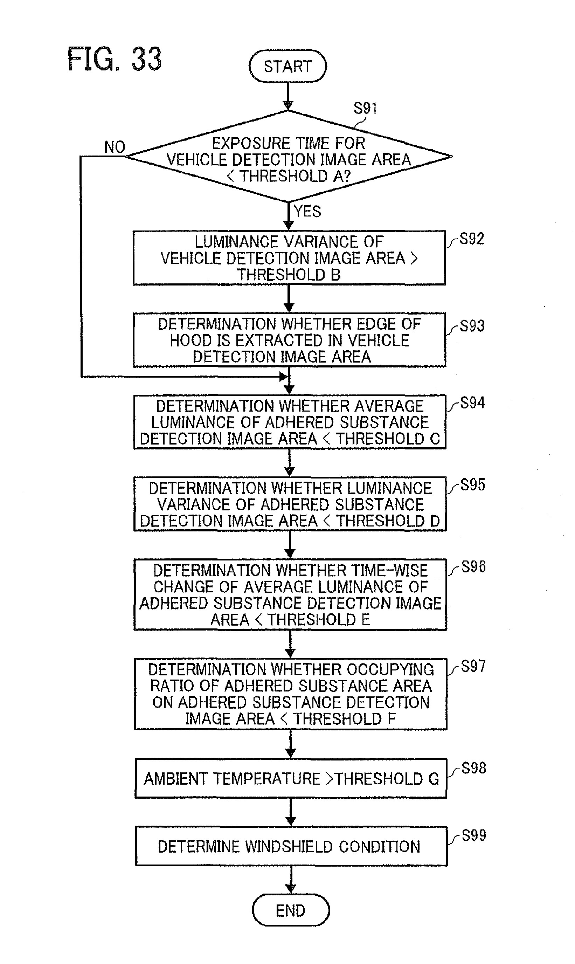

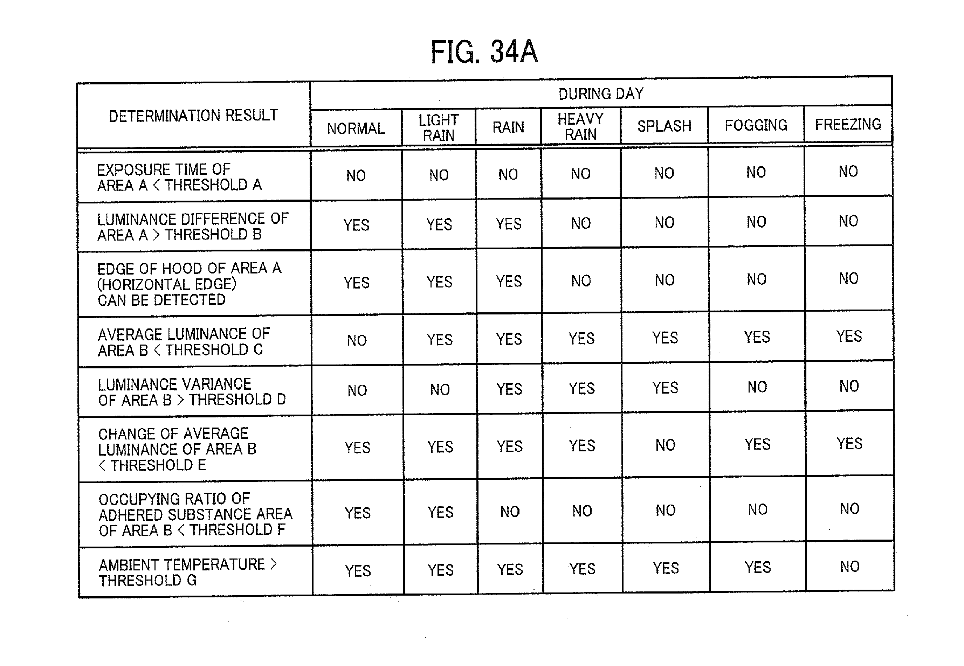

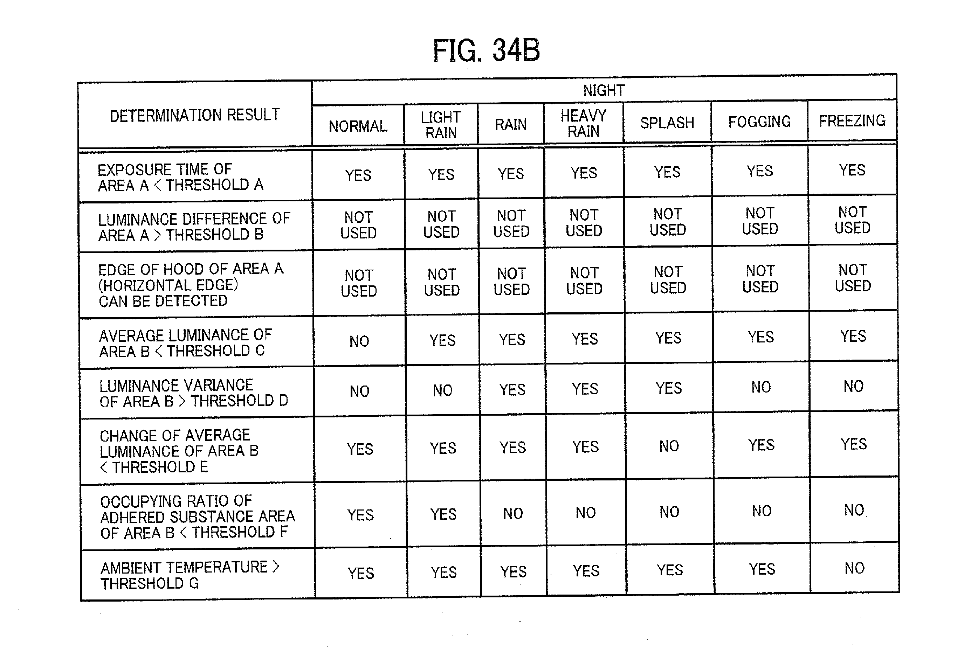

Upon storing the detected parameter for the wiper control and the defroster control, the condition of the windshield 105 is determined (S9). FIG. 33 shows a flowchart of a process of determining the condition of the windshield 105. FIGs. 34A and 34B are tables having determination criteria for determining the condition of the windshield 105.

In a process of determining the conditions of the windshield 105, initially, it is determined whether the exposure time for the vehicle detection image area 231, determined by the automatic exposure adjustment at step S1, is smaller than a threshold A, for example, 40 ms (S91). If the exposure time becomes great such as greater than the threshold A, it can be determined that an image capturing area is at night with a little light quantity. Therefore, whether the exposure time is smaller than the threshold A, it can be recognized whether the image capturing area is during the day or at night.

If it is determined that the image capturing area is at night, the determination precision of the condition of the windshield 105 based on the parameter obtained from the image data of the vehicle detection image area 231 (e.g., luminance variance, edge extraction result of the hood) becomes low. Therefore, if it is determined at night, the parameter obtained from the image data of the vehicle detection image area 231 (e.g., luminance variance, edge extraction result of the hood) are not used, but the parameter obtained from the adhered substance detection image area 232 is used to determine the condition of the windshield 105.

If it is determined that the image capturing area is during the day at step S91, then it is determined whether the luminance variance of the vehicle detection image area 231 is greater than a threshold B (S92), and this determination result is stored to a given storage area. The threshold B can be set by experiments or the like for each exposure time, and prepared as a table. The threshold B is preferably determined and used depending on each exposure time.

Further, if it is determined that the image capturing area is during the day at step S91, it is determined whether the edge portion of the hood in the vehicle detection image area 231 is extracted (S93), and this determination result is stored to a given storage area.

The extraction of the edge portion of the hood can be conducted as follows. For example, an image area including the hood and background is captured, and then a differential image for the horizontal edge component of image is generated based on luminance change of adjacent pixels in the vertical direction of the image. The generated differential image is compared with each differential image pattern of the horizontal edge component stored in advance, by which comparison result is obtained. If it is determined that a pattern matching deviation for each detected area is a given threshold or less based on the comparison result, it is determined that the edge portion of the hood is detected. If the edge portion can be extracted, it can be determined that fogging, freezing, or splash does not occur to the windshield 105.

Then, it is determined for various parameters obtained from the adhered substance detection image area 232. Specifically, it is determined whether the average luminance for the adhered substance detection image area 232 is greater or smaller than a threshold C (S94), and this determination result is stored in a given storage area. As described above, if raindrops adhere on the windshield 105, the average luminance becomes small. For example, if the luminance of the adhered substance detection image area 232 has 1024 gradient, it is determined whether the average luminance is smaller than 900 (threshold C), removing noise component, is detected.

Further, it is determined whether the luminance variance for the adhered substance detection image area 232 is greater or smaller than a threshold D (S95), and this determination result is stored in a given storage area. For example, if the luminance of the adhered substance detection image area 232 has 1024 gradient, it can be determined that the windshield 105 is fogged up or freezing when the luminance variance is smaller than the threshold D such as 50.

Further, it is determined whether the time-wise change of the average luminance for the adhered substance detection image area 232 is greater or smaller than a threshold E (S96), and this determination result is stored in a given storage area. For example, if the average luminance of the adhered substance detection image area 232 is 900 or more for the last time capturing, and the average luminance value of the adhered substance detection image area 232 is less than 700 for the current time capturing, the time-wise change of the average luminance is determined greater than the threshold E, by which it can be determined that splash has occurred.

Further, it is determined whether the occupying ratio of adhered substance area on the adhered substance detection image area 232 is smaller than a threshold F such as one-fifth (S97), and this determination result is stored in a given storage area. For example, under a condition that the light emitted from the light source unit 210 irradiates evenly, if an area having the average luminance less than 900 is smaller than the one-fifth, it can be determined that light rain adheres, and if an area having the average luminance less than 900 is one-fifth (1/5) or more, it can be determined that substances other than light rain adheres.

Further, in an example embodiment, a detection result of the temperature sensor 111 can be used as a parameter for the wiper control and the defroster control, in which it is determined whether the ambient temperature detected by the temperature sensor 111 is greater or smaller than a threshold G (S98), and this determination result is stored in a given storage area. For example, if the ambient temperature is zero degree (threshold G) or below, it can be determined that snowing or feezing occurs.

Upon obtaining the determination result for each of parameters, based on the determination result for each of parameters and information included in the table shown in FIGs. 34A and 34B, the condition of the windshield 105 can be determined (S99). In this condition determination, the determination result for each of parameters may be preferably set with weighting. For example, the parameter detected for the adhered substance detection image area 232 and ambient temperature may be set with a weighting coefficient of 10, and the parameter detected for the vehicle detection image area 231 may be set with a weighting coefficient of 5. Further, as for the determination result for each of parameters, 1 is set when a difference exists with a normal value, and 0 is set when a difference does not exist with a normal value. Then, the determination result for each of parameters is multiplied with the weighting coefficient to obtain a total sum of the determination result the parameters. Then, the total sum is compared with a threshold. With this configuration, even if the determination result for each of parameters does not exactly match the information in the tables shown in FIGs. 34A and 34B, the conditions of the windshield 105 can be determined.

Further, if it is determined that the parameter for the adhered substance detection image area 232 is different from the normal value, the wiper may be operated one time, and then condition of the windshield 105 can be checked and determined again using each parameter.

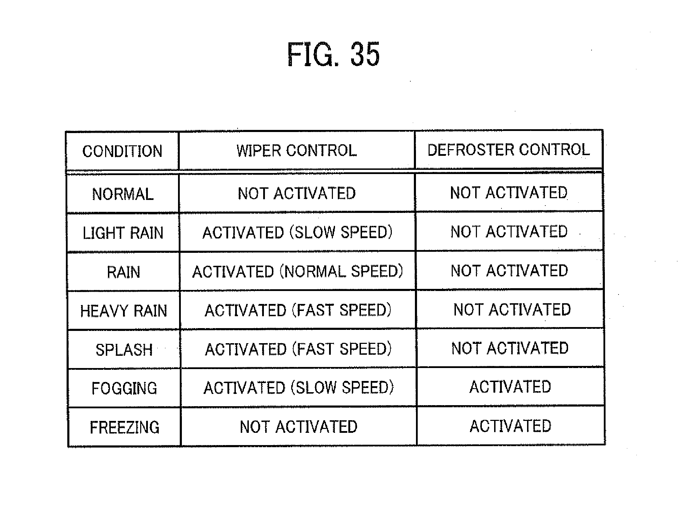

When the determination result for condition of the windshield 105 is obtained, the image analyzer 102 issues instructions for processes and controls such as wiper control and defroster control matched to the result of condition determination (S10) in view of on a table shown in FIG. 35. For example, the wiper control controls the wiper speed at three steps (e.g., slow, normal, fast), and the defroster control controls whether hot air is flowed to the inner face of the windshield 105 with a maximum wind volume.

In the above description, the reflective deflection prism 220 having the reflection face 221 to reflect the light emitted from the light source unit 210 is used as an optical member, but not limited hereto. For example, a mirror having the reflection face 221 can be provided.

In the above described example embodiment, the adhered substance detection apparatus 300 includes the light irradiating unit such as the light source unit 210 disposed at the first face (e.g., inner face) side of a planar member such as the windshield 105 having light transmittance; the image capturing unit having the image sensor 206 to capture an image of a detection target object such as raindrops adhering on a second face (e.g., outer face) of the planar member using light emitted from the light irradiating unit; the detection processing means to conduct a detection process for detecting the detection target object based on captured image captured by the image capturing unit; and the light quantity adjuster 102B to adjust light quantity emitted from the light irradiating unit. The image capturing unit 101 is disposed at a position to receive regular reflection light regularly reflected on a non-adhering area of detection target object on the second face of the planar member, the regular reflection light is the light emitted from the light irradiating unit and then reflected on the non-adhering area of detection target object. The detection processing means conducts a detection process to detect an object adhered on the second face of the planar member as the detection target object, in which a part of light emitted from the light irradiating unit passes through an adhering area where the object adheres. When the quantity of light received by the image capturing unit 101 at a given number or more image capturing pixels substantially uniformly exceeds or falls below a control value, the light quantity adjuster 102B adjusts the light quantity emitted from the light irradiating unit so that the light quantity received by the image capturing pixels becomes a target light quantity. With this configuration, based on the received light quantity received by the image capturing unit, the light quantity irradiated by the light irradiating unit can be adjusted, and thereby a specific light receiving device to monitor the time-wise change of the light quantity irradiated from the light irradiating unit is not required. Further, the received light quantity change due to adhesion of raindrops, which is the detection target object, and the received light quantity change due to the light quantity change at the light irradiating unit can be distinguished, by which a false detection, due to the time-wise change of the light quantity irradiated from the light irradiating unit, can be suppressed further effectively.

In the above described example embodiment, the detection target object is raindrops, and wherein the given number of image capturing pixels is set at a number greater than the number of image capturing pixels corresponding to an image size of one raindrop such as 30 × 30 pixels. With this configuration, the received light quantity change due to adhesion of raindrops, which is the detection target object, and the received light quantity change due to the light quantity change at the light irradiating unit can be distinguished, by which a false detection, due to the time-wise change of the light quantity irradiated from the light irradiating unit, can be suppressed further effectively.

In the above described example embodiment, the adhered substance detection apparatus further includes the optical member 220 having a reflection face that regularly reflects the light emitted from the light irradiating unit 210 to the planar member. With this configuration, compared to a layout that light irradiated from the light irradiating unit entering the planar member directly, the layout freedom of the adhered substance detection apparatus can be enhanced.

In the above described example embodiment, the adhered substance detection apparatus further includes the cleaning device such as the wiper 107 to clean the second face of the planar member to remove the detection target object adhering on the second face. After a cleaning operation by the cleaning device, the light quantity adjuster 102B adjusts light quantity emitted from the light irradiating unit so that light quantity received by the image capturing pixels becomes a target light quantity when light quantity received by the image capturing unit 101 becomes light quantity greater than a control value at a given number or more image capturing pixels substantially uniformly, or when light quantity received by the image capturing unit 101 becomes light quantity smaller than the control value at the given number or more image capturing pixels substantially uniformly. With this configuration, the received light quantity change due to adhering of the detection target object on the second face of the planar member substantially uniformly and the received light quantity change due to the light quantity change at the light irradiating unit can be distinguished, by which a false detection due to the time-wise change of the light quantity irradiated from the light irradiating unit can be suppressed further effectively.

In the above described example embodiment, the light irradiating unit 210 is set with light-ON time for emitting light and light-OFF time for not emitting light when the image capturing unit 101 is capturing images. The image capturing unit 101 captures an image when the light-ON time as a light-ON image, and image when the light-OFF time as a light-OFF image. The detection processing means 102 conducts a detection process to detect the detection target object based on a difference image between the light-ON image and the light-OFF image captured by the image capturing unit 101. With this configuration, the effect of ambient light can be removed, by which a false detection, due to the time-wise change of the light quantity irradiated from the light irradiating unit, can be suppressed further effectively.

In the above described example embodiment, the image capturing unit captures the light-ON image and the light-OFF image consecutively. With this configuration, the effect of ambient light can be removed with high precision, by which a false detection, due to the time-wise change of the light quantity irradiated from the light irradiating unit, can be suppressed further effectively.

In the above described example embodiment, the image capturing unit captures the light-ON image and the light-OFF image using the same exposure time when capturing images. With this configuration, the effect of ambient light can be removed with high precision, by which a false detection, due to the time-wise change of the light quantity irradiated from the light irradiating unit, can be suppressed further effectively.

In the above described example embodiment, the light separation filter (251, 255) is disposed for the image capturing unit to selectively pass through light having a given wavelength window among light emitted from the light irradiating unit. With this configuration, the effect of ambient light can be removed further effectively, by which a false detection, due to the time-wise change of the light quantity irradiated from the light irradiating unit, can be suppressed further effectively.

In the above described example embodiment, the device control system for a movable apparatus such as vehicles like automobiles includes the adhered substance detection apparatus 300 that detects a detection target object adhering on the second face of the window planar member such as the windshield 105 based on an image captured by the image capturing unit 101 disposed at the first face side of the window planar member of the movable apparatus; and one or more device controllers such as the image analyzer 102, the wiper controller 106, and the defroster controller 109 to control devices such as the wiper 107 and the defroster 110 installed in the movable apparatus based on a detection result of detection target object detected by the adhered substance detection apparatus 300. With this configuration, the devices can be controlled based on an effective detection result of the detection target object, thereby the devices can be controlled effectively.

In the above described example embodiment, the movable apparatus such as a vehicle having a window planar member such as the windshield 105 includes the device control system to control the devices installed in the movable apparatus. With this configuration, the movable apparatus that can control devices effectively is devised.

In the above described example embodiment of the adhered substance detection apparatus, the device control system for movable apparatus, and the movable apparatus, even if the light quantity irradiated from the light irradiating unit changes time-wisely, without disposing a specific light receiver to monitor the time-wise change of light quantity irradiated from the light irradiating unit, a false detection of a detection target object adhered on a second face of a light-permeable planar member can be suppressed.

In the above described example embodiment, the light quantity irradiated from the light irradiating unit can be adjusted based on the received light quantity received by the image capturing unit. Therefore, a specific light receiver to monitor the time-wise change of the light quantity irradiated from the light irradiating unit is not required.

When adjusting the light quantity irradiated from the light irradiating unit, the received light quantity received by the image capturing unit can be used. Specifically, a change of the received light quantity received by the image capturing unit due to adhering a detection target object on a second face of a planar member can be distinguished from a change of the received light quantity received by the image capturing unit due to change of the light quantity irradiated from the light irradiating unit.

Further, in the above described example embodiment, light irradiated to the non-adhering area from the light irradiating unit is regularly reflected on a non-adhering area on the second face of the planar member where a detection target object does not adhere, and then the regular reflection light is received by the image capturing unit. In contrast, a part of the light quantity irradiated from the light irradiating unit passes through an adhering area on the second face of the planar member where a detection target object adheres. Therefore, the quantity of regular reflection light received by the image capturing unit corresponding to the adhering area becomes smaller than the quantity of regular reflection light received by the image capturing unit corresponding to the non-adhering area. Therefore, compared to the quantity of received light quantity received by image capturing pixels corresponding to the adhering area, the quantity of received light quantity received by image capturing pixels corresponding to the non-adhering area becomes smaller.

Further, when the light quantity irradiated from the light irradiating unit changes, the received light quantity received by the image capturing pixels that receives regular reflection light from the non-adhering area changes uniformly. In this configuration, when the received light quantity received by the image capturing pixels changes uniformly in a area greater than adhering area of detection target object, the change of received light quantity may not be caused by adhering of the detection target object but may be caused by change of the light quantity irradiated from the light irradiating unit.

In the above described example embodiment, when light quantity received by the image capturing unit becomes light quantity greater than a control value at a given number or more image capturing pixels substantially uniformly, or when light quantity received by the image capturing unit becomes light quantity smaller than the control value at the given number or more image capturing pixels substantially uniformly, it is determined that the received light quantity received by the image capturing unit changes due to the change of the light quantity irradiated from the light irradiating unit. Therefore, by setting the given number of target image pixels at least greater than the number of image capturing pixels matched to an expected size of the detection target object such as raindrops, the change of received light quantity change due to the change of the light quantity of the light irradiating unit can be distinguished from the change of received light quantity due to the adhesion of the detection target object. With this configuration, when the change of light quantity of the light irradiating unit is detected, the light quantity irradiated from the light irradiating unit can be adjusted, and a false detection, due to time-wise change of the light quantity irradiated from the light irradiating unit, can be suppressed.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device.

The computer software can be provided to the programmable device using any storage medium, carrier medium, carrier means, or digital data carrier for storing processor readable code such as a flexible disk, a compact disk read only memory (CD-ROM), a digital versatile disk read only memory (DVD-ROM), DVD recording only/ rewritable (DVD-R/RW), electrically erasable and programmable read only memory (EEPROM), erasable programmable read only memory (EPROM), a memory card or stick such as USB memory, a memory chip, a mini disk (MD), a magneto optical disc (MO), magnetic Tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), Java-Script (registered trademark), Perl, Ruby, or legacy programming languages such as machine language, assembler language to control functional units used for the apparatus or system. For example, a particular computer (e.g., personal computer, work station) may control an information processing apparatus or an image processing apparatus such as image foaming apparatus using a computer-readable program, which can execute the above-described processes or steps. In the above described embodiments, at least one or more of the units of apparatus can be implemented in hardware or as a combination of hardware/software combination. In example embodiment, processing units, computing units, or controllers can be configured with using various types of processors, circuits, or the like such as a programmed processor, a circuit, an application specific integrated circuit (ASIC), used singly or in combination.

Numerous additional modifications and variations are possible in light of the above teachings. It is therefore to be understood that, within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. An adhered substance detection apparatus (300) comprising:

   a light irradiating unit (210) disposed at a first face side of a planar member (105) having light transmittance;
   an image capturing unit (101) to capture an image of a detection target object adhering on a second face of the planar member (105) using light emitted from the light irradiating unit (210);
   a detection processing means (102) to conduct a detection process for detecting the detection target object based on captured image captured by the image capturing unit (101); and
   a light quantity adjuster (102B) to adjust light quantity emitted from the light irradiating unit,

wherein the image capturing unit (101) is disposed at a position to receive regular reflection light regularly reflected on a non-adhering area of detection target object on the second face of the planar member (105), the regular reflection light is the light emitted from the light irradiating unit and then reflected on the non-adhering area of detection target object, wherein the detection processing means (102) conducts a detection process to detect an object adhered on the second face of the planar member (105) as the detection target object, in which a part of light emitted from the light irradiating unit passing through an adhering area where the object adheres, wherein when the quantity of light received by the image capturing unit (101) at a given number or more image capturing pixels substantially uniformly exceeds or falls below a control value, the light quantity adjuster (102B) adjusts the light quantity emitted from the light irradiating unit so that the light quantity received by the image capturing pixels becomes a target light quantity.

2. The adhered substance detection apparatus (300) of claim 1, wherein the detection target object is raindrop, and wherein the given number of image capturing pixels is set at a number greater than the number of image capturing pixels for capturing an image size equivalent to one raindrop.

3. The adhered substance detection apparatus (300) of claims 1 or 2, further comprising an optical member (220) having a reflection face that regularly reflects the light emitted from the light irradiating unit (210) on to the planar member (105).

4. The adhered substance detection apparatus (300) of any one of claims 1 to 3, further comprising a cleaning device (107) to clean the second face of the planar member to remove the detection target object adhering on the second face, wherein, after a cleaning operation by the cleaning device, the light quantity adjuster (102B) adjusts light quantity emitted from the light irradiating unit so that light quantity received by the image capturing pixels becomes a target light quantity when the light quantity received by the image capturing unit (101) at a given number of image capturing pixels substantially uniformly either exceeds or falls below a control value.

5. The adhered substance detection apparatus (300) of any one of claims 1 to 4, wherein the light irradiating unit (210) is set with light-ON time for emitting light and light-OFF time for not emitting light when the image capturing unit (101) is capturing images, wherein the image capturing unit (101) captures an image during the light-ON time as a light-ON image, and captures an image during the light-OFF time as a light-OFF image, wherein the detection processing means (102) conducts a detection process to detect the detection target object based on a difference between the light-ON image and the light-OFF image captured by the image capturing unit (101).

6. The adhered substance detection apparatus (300) of claim 5, wherein the image capturing unit captures the light-ON image and the light-OFF image consecutively.

7. The adhered substance detection apparatus (300) of claims 5 or 6, wherein the image capturing unit captures the light-ON image and the light-OFF image using the same exposure time when capturing images.

8. An image capturing apparatus (101), comprising:

   the adhered substance detection apparatus (300) of any one of claims 1 to 7; and
   a light separation filter (251, 255) to selectively pass through light having a given wavelength window among all light wavelengths emitted from the light irradiating unit.

9. A device control system for a movable apparatus, comprising:

   the adhered substance detection apparatus (300) of any one of claims 1 to 8 that detects a detection target object adhering on the second face of the planar member (105) based on an image captured by the image capturing unit (101) disposed at the first face side of the planar member (105) of the movable apparatus; and
   one or more device controllers (102, 106, 109) to control devices installed in the movable apparatus based on a detection result of detection target object detected by the adhered substance detection apparatus (300).

10. A movable apparatus having a window planar member comprising:

    the device control system of claim 9 to control the devices installed in the movable apparatus.

# FIG. 1

105

107

101
IMAGE CAPTURING UNIT

110

109

108

106
WIPER CONTROLLER

DEFROSTER CONTROLLER

VEHICLE CONTROLLER

104

111

103
HEADLIGHT CONTROLLER

IMAGE ANALYZER
102

TEMPERATURE SENSOR

100

# FIG. 2

300

205  206  207

200

208

102

204

SIGNAL PROCESSOR

IMAGE ANALYZER

DETECTION PROCESSOR
102A

LIGHT QUANTITY ADJUSTER
102B

210

Z

Y

X

# FIG. 3

RANGE OF FIELD ANGLE

# FIG. 4

# FIG. 5

# FIG. 6

# FIG. 7

# FIG. 8

# FIG. 9A

# FIG. 9B

RANGE OF FIELD ANGLE

# FIG. 9C

RANGE OF FIELD ANGLE

## FIG. 10A

## FIG. 10B

RANGE OF FIELD ANGLE

## FIG. 11

# FIG. 12

# FIG. 13

# FIG. 14

# FIG. 15

# FIG. 16

WAVELENGTH OF EMISSION
LIGHT OF LIGHT SOURCE 202

# FIG. 17

WAVELENGTH OF EMISSION
LIGHT OF LIGHT SOURCE 202

# FIG. 18

205 →

205A

205B

# FIG. 19

FRONT-RUNNING VEHICLE (VEHICLE AHEAD)

231

232

WHITE LINE

ROAD SURFACE

203

# FIG. 20

# FIG. 21

# FIG. 22

# FIG. 23

# FIG. 24

# FIG. 25A

# FIG. 25B

# FIG. 26A

# FIG. 26B

# FIG. 27

START

LIGHT SOURCE IS SET LIGHT-ON ⟋S101

CAPTURE LIGHT-ON IMAGE ⟋S102

LIGHT SOURCE IS SET LIGHT-OFF ⟋S103

CAPTURE LIGHT-OFF IMAGE ⟋S104

DIFFERENCE IMAGE IS GENERATED BASED ON LIGHT-ON IMAGE AND LIGHT-OFF IMAGE ⟋S105

STORE LUMINANCE VALUE OF EACH TARGET IMAGE PIXEL IN DIFFERENCE IMAGE ⟋S106

S107

LUMINANCE VALUE OF EACH IMAGE TARGET PIXEL IS GREATER THAN TARGET VALUE UNIFORMLY?

NO

YES

ADJUST LIGHT EMISSION OUTPUT OF LIGHT SOURCE ⟋S108

END

# FIG. 28

```
                    ( START )
                        │
                        ▼
        ┌─────────────────────────────────┐
        │    EXPOSURE ADJUSTMENT IS        │  ⌐S1
        │ CONDUCTED FOR VEHICLE DETECTION  │
        │          IMAGE AREA              │
        └─────────────────────────────────┘
                        │
                        ▼
        ┌─────────────────────────────────┐
        │   OBTAIN IMAGE DATA OF VEHICLE   │  ⌐S2
        │       DETECTION IMAGE AREA       │
        └─────────────────────────────────┘
                        │
                        ▼
        ┌─────────────────────────────────┐
        │ DETECTION PROCESS OF PARAMETER   │  ⌐S3
        │ FOR VEHICLE DETECTION IMAGE AREA │
        └─────────────────────────────────┘
                        │
                        ▼
        ┌─────────────────────────────────┐
        │      STORE PARAMETER FOR         │  ⌐S4
        │   VEHICLE DETECTION IMAGE AREA   │
        └─────────────────────────────────┘
                        │
                        ▼
        ┌─────────────────────────────────┐
        │     EXPOSURE ADJUSTMENT IS       │  ⌐S5
        │     CONDUCTED FOR ADHERED        │
        │ SUBSTANCE DETECTION IMAGE AREA   │
        └─────────────────────────────────┘
                        │
                        ▼
        ┌─────────────────────────────────┐
        │     OBTAIN IMAGE DATA OF         │  ⌐S6
        │       ADHERED SUBSTANCE          │
        │       DETECTION IMAGE AREA       │
        └─────────────────────────────────┘
                        │
                        ▼
        ┌─────────────────────────────────┐
        │     DETECTION PROCESS OF         │  ⌐S7
        │    PARAMETER FOR ADHERED         │
        │ SUBSTANCE DETECTION IMAGE AREA   │
        └─────────────────────────────────┘
                        │
                        ▼
        ┌─────────────────────────────────┐
        │  STORE PARAMETER FOR ADHERED     │  ⌐S8
        │ SUBSTANCE DETECTION IMAGE AREA   │
        └─────────────────────────────────┘
                        │
                        ▼
        ┌─────────────────────────────────┐
        │   DETERMINATION PROCESS OF       │  ⌐S9
        │      WINDSHIELD CONDITION        │
        └─────────────────────────────────┘
                        │
                        ▼
        ┌─────────────────────────────────┐
        │        ISSUE INSTRUCTION         │  ⌐S10
        └─────────────────────────────────┘
                        │
                        ▼
                    (  END  )
```

# FIG. 29

```
        ┌─────────┐
        │  START  │
        └────┬────┘
             │
             ▼
┌──────────────────────────────┐
│ COMPUTE LUMINANCE VARIANCE OF │── S31
│ VEHICLE DETECTION IMAGE AREA  │
└──────────────┬───────────────┘
               │
               ▼
┌──────────────────────────────┐
│   DETECTION PROCESS OF EDGE   │── S32
│           OF HOOD             │
└──────────────┬───────────────┘
               │
               ▼
        ┌─────────┐
        │   END   │
        └─────────┘
```

# FIG. 30

# FIG. 31

# FIG. 32

```
        ┌─────────┐
        │  START  │
        └─────────┘
             │
             ▼
┌───────────────────────────────┐
│ COMPUTE AVERAGE LUMINANCE OF   │  S71
│ ADHERED SUBSTANCE DETECTION    │
│          IMAGE AREA            │
└───────────────────────────────┘
             │
             ▼
┌───────────────────────────────┐
│ COMPUTE LUMINANCE VARIANCE OF  │  S72
│ ADHERED SUBSTANCE DETECTION    │
│          IMAGE AREA            │
└───────────────────────────────┘
             │
             ▼
┌───────────────────────────────┐
│   COMPUTE OCCUPYING RATIO OF   │  S73
│    ADHERED SUBSTANCE AREA      │
└───────────────────────────────┘
             │
             ▼
┌───────────────────────────────┐
│  COMPUTE TIME-WISE CHANGE OF   │  S74
│  AVERAGE LUMINANCE OF ADHERED  │
│ SUBSTANCE DETECTION IMAGE AREA │
└───────────────────────────────┘
             │
             ▼
┌───────────────────────────────┐
│  COMPUTE TIME-WISE CHANGE OF   │  S75
│  LUMINANCE VARIANCE OF ADHERED │
│ SUBSTANCE DETECTION IMAGE AREA │
└───────────────────────────────┘
             │
             ▼
┌───────────────────────────────┐
│  COMPUTE TIME-WISE CHANGE OF   │  S76
│   OCCUPYING RATIO OF ADHERED   │
│        SUBSTANCE AREA          │
└───────────────────────────────┘
             │
             ▼
        ┌─────────┐
        │   END   │
        └─────────┘
```

# FIG. 33

START

S91

NO ← EXPOSURE TIME FOR VEHICLE DETECTION IMAGE AREA < THRESHOLD A?

YES

LUMINANCE VARIANCE OF VEHICLE DETECTION IMAGE AREA > THRESHOLD B — S92

DETERMINATION WHETHER EDGE OF HOOD IS EXTRACTED IN VEHICLE DETECTION IMAGE AREA — S93

DETERMINATION WHETHER AVERAGE LUMINANCE OF ADHERED SUBSTANCE DETECTION IMAGE AREA < THRESHOLD C — S94

DETERMINATION WHETHER LUMINANCE VARIANCE OF ADHERED SUBSTANCE DETECTION IMAGE AREA < THRESHOLD D — S95

DETERMINATION WHETHER TIME-WISE CHANGE OF AVERAGE LUMINANCE OF ADHERED SUBSTANCE DETECTION IMAGE AREA < THRESHOLD E — S96

DETERMINATION WHETHER OCCUPYING RATIO OF ADHERED SUBSTANCE AREA ON ADHERED SUBSTANCE DETECTION IMAGE AREA < THRESHOLD F — S97

AMBIENT TEMPERATURE >THRESHOLD G — S98

DETERMINE WINDSHIELD CONDITION — S99

END

41

## FIG. 34A

| DETERMINATION RESULT | DURING DAY | | | | | | |
|---|---|---|---|---|---|---|---|
| | NORMAL | LIGHT RAIN | RAIN | HEAVY RAIN | SPLASH | FOGGING | FREEZING |
| EXPOSURE TIME OF AREA A < THRESHOLD A | NO | NO | NO | NO | NO | NO | NO |
| LUMINANCE DIFFERENCE OF AREA A > THRESHOLD B | YES | YES | YES | NO | NO | NO | NO |
| EDGE OF HOOD OF AREA A (HORIZONTAL EDGE) CAN BE DETECTED | YES | YES | YES | NO | NO | NO | NO |
| AVERAGE LUMINANCE OF AREA B < THRESHOLD C | NO | YES | YES | YES | YES | YES | YES |
| LUMINANCE VARIANCE OF AREA B > THRESHOLD D | NO | NO | YES | YES | YES | NO | NO |
| CHANGE OF AVERAGE LUMINANCE OF AREA B < THRESHOLD E | YES | YES | YES | YES | NO | YES | YES |
| OCCUPYING RATIO OF ADHERED SUBSTANCE AREA OF AREA B < THRESHOLD F | YES | YES | NO | NO | NO | NO | NO |
| AMBIENT TEMPERATURE > THRESHOLD G | YES | YES | YES | YES | YES | YES | NO |

EP 2 696 195 A2

# FIG. 34B

| DETERMINATION RESULT | NIGHT | | | | | | |
|---|---|---|---|---|---|---|---|
| | NORMAL | LIGHT RAIN | RAIN | HEAVY RAIN | SPLASH | FOGGING | FREEZING |
| EXPOSURE TIME OF AREA A < THRESHOLD A | YES | YES | YES | YES | YES | YES | YES |
| LUMINANCE DIFFERENCE OF AREA A > THRESHOLD B | NOT USED | NOT USED | NOT USED | NOT USED | NOT USED | NOT USED | NOT USED |
| EDGE OF HOOD OF AREA A (HORIZONTAL EDGE) CAN BE DETECTED | NOT USED | NOT USED | NOT USED | NOT USED | NOT USED | NOT USED | NOT USED |
| AVERAGE LUMINANCE OF AREA B < THRESHOLD C | NO | YES | YES | YES | YES | YES | YES |
| LUMINANCE VARIANCE OF AREA B > THRESHOLD D | NO | NO | YES | YES | YES | NO | NO |
| CHANGE OF AVERAGE LUMINANCE OF AREA B < THRESHOLD E | YES | YES | YES | YES | NO | YES | YES |
| OCCUPYING RATIO OF ADHERED SUBSTANCE AREA OF AREA B < THRESHOLD F | YES | YES | NO | NO | NO | NO | NO |
| AMBIENT TEMPERATURE > THRESHOLD G | YES | YES | YES | YES | YES | YES | NO |

# FIG. 35

| CONDITION | WIPER CONTROL | DEFROSTER CONTROL |
|---|---|---|
| NORMAL | NOT ACTIVATED | NOT ACTIVATED |
| LIGHT RAIN | ACTIVATED (SLOW SPEED) | NOT ACTIVATED |
| RAIN | ACTIVATED (NORMAL SPEED) | NOT ACTIVATED |
| HEAVY RAIN | ACTIVATED (FAST SPEED) | NOT ACTIVATED |
| SPLASH | ACTIVATED (FAST SPEED) | NOT ACTIVATED |
| FOGGING | ACTIVATED (SLOW SPEED) | ACTIVATED |
| FREEZING | NOT ACTIVATED | ACTIVATED |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010014494 A